# EUROPEAN PATENT APPLICATION

(11) **EP 4 410 876 A1**
(43) Date of publication of application: **07.08.2024**
(21) Application number: 22876439.5
(22) Date of filing: 29.09.2022
(51) Int. Cl.: C08J 5/24, C08G 59/18, C08K 5/00

(54) **PREPREG PRODUCTION METHOD AND PREPREG**

(30) Priority: 29.09.2021 JP 2021159571
(71) Applicant: Mitsubishi Chemical Corporation, Chiyoda-ku Tokyo 100-8251 (JP)
(72) Inventor: MIYAHARA, Yuki, Tokyo 100-8251 (JP); OTA, Akira, Tokyo 100-8251 (JP)
(74) Representative: Vossius & Partner Patentanwälte Rechtsanwälte mbB
(86) International application number: PCT/JP2022/036407
(87) International publication number: WO 2023/054575

(57) **Abstract**

A method for producing a prepreg according an aspect of the present invention includes: obtaining an impregnated fiber reinforcement by impregnating a fiber reinforcement with a liquid epoxy resin composition which is a precursor material of a matrix; and thickening the liquid epoxy resin composition in the impregnated fiber reinforcement. An epoxy resin, an epoxy curing agent, a thickening agent, and a radically polymerizable liquid monomer are mixed in the liquid epoxy resin composition, and the thickening is performed so that the epoxy curing agent and the radically polymerizable liquid monomer remain in the matrix.

## Description

### Technical Field

The present invention mainly relates to a method for producing a prepreg and to the prepreg.

### Background Art

Fiber-reinforced plastic (FRP) is a lightweight material excellent in mechanical properties. This material is suitable for various kinds of parts of equipment for transportation such as automobiles, ships, railway vehicles, manned aircrafts, and unmanned aircrafts. Therefore, the fiber-reinforced plastic is of increasing importance in recent years.

As a method for efficiently producing FRP products, known is a method in which a prepreg such as a sheet molding compound (SMC) is subjected to compression molding. The prepreg is an intermediate material that has a structure in which a fiber reinforcement is impregnated with a matrix that comprises an uncured thermosetting resin composition.

The SMC is produced by a method in which after a fiber reinforcement of a random mat type is impregnated with a liquid thermosetting resin composition, the thermosetting resin composition is thickened.

The following techniques for thickening an epoxy resin composition have been proposed in order to put, to practical use, an SMC in which an epoxy resin is used.
- To mix, with an epoxy resin, a thermoplastic resin powder that exhibits solubility in the epoxy resin when heated (Patent Literature 1).
- To mix a polyol and polyisocyanate with an epoxy resin (Patent Literature 2).
- To mix, with an epoxy resin, styrene and maleic anhydride together with a radical polymerization initiator (Patent Literature 3).
- To mix a relatively small amount of carboxylic acid anhydride with an epoxy resin (Patent Literature 4).
- To mix a relatively small amount of an amine compound with an epoxy resin (Patent Literature 5).

In addition, in order to reduce excessive flow of an SMC in press molding, proposed is a technique in which the following substances are mixed with an epoxy resin: (a) an amine or a carboxylic acid anhydride that has a thickening action at a temperature of less than or equal to 40°C; and (b) a thickening particles that have a thickening action at a temperature of more than or equal to 45°C (Patent Literature 6).

### Citation List

### [Patent Literature]

[Patent Literature 1]
   Japanese Patent Application Publication, Tokukaihei, No. 11-181245
[Patent Literature 2]
   Japanese Patent Application Publication, Tokukaihei, No. 4-88011
[Patent Literature 3]
   Japanese Patent Application Publication, Tokukaishou, No. 59-68321
[Patent Literature 4]
   International Publication No. WO 1998/022527
[Patent Literature 5]
   Japanese Patent Application Publication, Tokukaihei, No. 6-166742
[Patent Literature 6]
   Japanese Patent Application Publication, Tokukai, No. 2019-167429

### Summary of Invention

### Technical Problem

A main object of an aspect of the present invention is to provide an SMC which contains an epoxy resin in a matrix, and which, although being soft at room temperature, makes it unlikely that its matrix is squeezed out from its fiber reinforcement when the SMC is heated and compressed.

In the present specification, a problem that can be solved by each of embodiments of the present invention may be explicitly or implicitly disclosed.

### Solution to Problem

An aspect of the present invention provides a method for producing a prepreg comprising a fiber reinforcement and a matrix. The method includes: obtaining an impregnated fiber reinforcement by impregnating the fiber reinforcement with a liquid epoxy resin composition which is a precursor material of the matrix; and thickening the liquid epoxy resin composition in the impregnated fiber reinforcement. An epoxy resin, an epoxy curing agent, a thickening agent, and a radically polymerizable liquid monomer are mixed in the epoxy resin composition, and the thickening is performed so that the epoxy curing agent and the radically polymerizable liquid monomer remain in the matrix.

Another aspect of the present invention provides a prepreg comprising a fiber reinforcement and a matrix. The matrix is an epoxy resin composition comprising an epoxy curing agent and a radically polymerizable liquid monomer. This epoxy resin composition has been thickened with use of a thickening agent so as to have a viscosity at 25°C of more than or equal to 2000 Pa·s and less than or equal to 20000 Pa·s.

### Advantageous Effects of Invention

According to a preferred embodiment of the present invention, provided is an SMC which contains an epoxy resin in a matrix, and which, although being soft at room temperature, makes it unlikely that its matrix is squeezed out from its fiber reinforcement when the SMC is heated and compressed.

### Brief Description of Drawings

Fig. 1 is a diagram schematically illustrating a configuration of an SMC production device.
Fig. 2 is a graph showing a typical viscosity-temperature curve, which is obtained in a case where viscosity of a thickened matter which has been obtained by thickening a liquid epoxy resin composition is measured while increasing temperature.
Fig. 3 is a bottom view schematically illustrating a ribbed hat channel.
Fig. 4 is a view schematically illustrating a cross section taken along line A-A of the ribbed hat channel illustrated in Fig. 3.
Fig. 5 is a view illustrating a position of an SMC when the SMC was charged into a mold in a molding experiment of the ribbed hat channel.

### Description of Embodiments

The following description will explain in detail embodiments of the present invention.

Viscosity of a liquid epoxy resin composition or of a thickened matter thereof in the following explanation refers to a viscosity which is measured with use of a rheometer under the following conditions: an oscillatory mode, an angular velocity of 10 rad/s, a fixed stress of 300 Pa, a plate diameter of 25 mm, and a distance between plates of 0.5 mm.

In the following explanation, the liquid epoxy resin composition may be abbreviated as LERC.

### 1. Method for producing prepreg

An embodiment of the present invention relates to a method for producing a prepreg comprising a fiber reinforcement and a matrix.

The method according to the embodiment comprises the following three steps:
(i) the step of preparing, as a precursor material of the matrix, an LERC in which an epoxy resin, an epoxy curing agent, a thickening agent, and a radically polymerizable liquid monomer are mixed;
(ii) the step of obtaining an impregnated fiber reinforcement by impregnating a fiber reinforcement with the LERC; and
(iii) the step of thickening the LERC in the impregnated fiber reinforcement to complete the prepreg.

In the following description, the steps related to (i) to (iii) will be also referred to as Steps (i) to (iii), respectively.

### [Step (i)]

In Step (i), the LERC is prepared by mixing a plurality of components that include an epoxy resin, an epoxy curing agent, a thickening agent, and a radically polymerizable liquid monomer.

The LERC is solvent-free unlike varnish, and it is not necessary to remove a solvent before the LERC is thickened.

The LERC is liquid at room temperature, and has an initial viscosity at 25°C of preferably less than or equal to 15 Pa·s, more preferably less than or equal to 10 Pa·s, and still more preferably less than or equal to 5 Pa·s. The initial viscosity of the LERC has no particular lower limit, and can be, for example, more than or equal to 0.1 Pa·s, more than or equal to 0.2 Pa·s, or more than or equal to 0.5 Pa·s at 25°C.

The initial viscosity refers to the viscosity which is measured within 5 minutes from preparation.

The viscosity of the LERC increases with time, due to an action of the thickening agent.

In a case where the LERC is kept at 25°C for more than or equal to 6 days and less than or equal to 15 days from preparation of the LERC, the viscosity at 25°C is preferably more than or equal to 2000 Pa·s, more preferably more than or equal to 3000 Pa·s, and still more preferably more than or equal to 4000 Pa·s, and preferably less than or equal to 20000 Pa·s, more preferably less than or equal to 10000 Pa·s, and still more preferably less than or equal to 8000 Pa·s.

Details of each of the components that are mixed in the LERC will be explained later.

### [Step (ii)]

In Step (ii), the impregnated fiber reinforcement is formed by impregnating the fiber reinforcement with the LERC prepared in Step (i).

In a case where the viscosity of the LERC is within the above-described preferable range, the fiber reinforcement can be impregnated, without heating the LERC, in a room at a temperature of more than or equal to 17°C and less than or equal to 28°C that is suitable for work operation.

Suitable examples of a material of the fiber reinforcement include carbon fibers, glass fibers, and aramid fibers. Among others, carbon fibers are most preferable because carbon fibers have a small specific gravity and high strength.

Examples of a form of the fiber reinforcement include, but are not limited to, a random mat, a woven fabric, a nonwoven fabric, and a non-crimp fabric.

The random mat is formed by scattering short fiber bundles obtained by cutting a continuous fiber bundle with a chopper and let them pile up on a carrier film. An SMC is a type of prepreg in which a random mat is used as the fiber reinforcement.

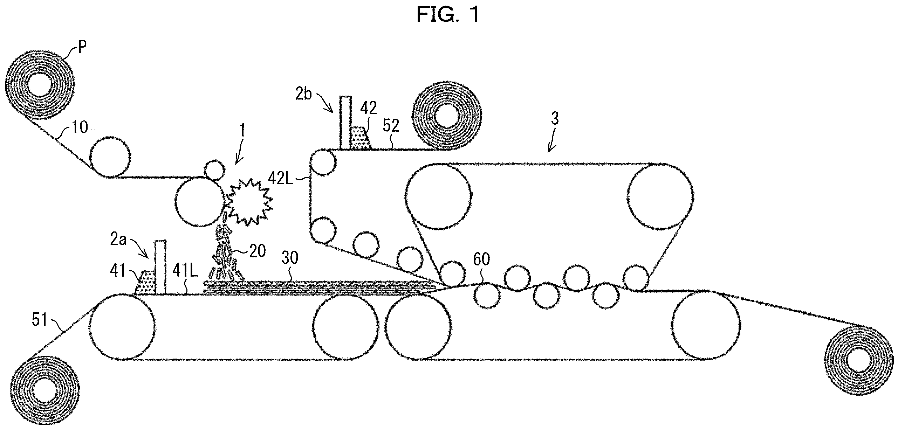

In a case where the SMC is produced, typically an impregnated random mat is formed with use of an SMC production device, which has a basic configuration illustrated in Fig. 1. The following briefly explains a procedure.

A continuous fiber bundle 10, which is a raw material of a random mat, is drawn from a fiber package P and fed to a chopper 1. The continuous fiber bundle 10 is a carbon fiber bundle comprising, for example, 1000 to 100000 filaments per bundle, and may be partially split.

The continuous fiber bundle 10 is cut by the chopper 1 into short fiber bundles 20. The short fiber bundles 20 have a fiber length which is within a range of, for example, 5 mm to 100 mm, and which can typically be approximately 1.3 cm (0.5 inches), approximately 2.5 cm (1 inch), approximately 3.8 cm (1.5 inches), or approximately 5.1 cm (2 inches).

The short fiber bundles 20 fall and pile up on the first carrier film 51 that runs below the chopper 1, so that a random mat 30 is formed.

Before deposition of the random mat 30, a first resin paste layer 41L is formed by applying a first resin paste 41 to a surface of the first carrier film 51 with a first applicator 2a including a doctor blade.

Following formation of the random mat 30, the first carrier film 51 and the second carrier film 52 are bonded to each other so as to sandwich the random mat 30 therebetween, so that a laminate 60 is formed. Before the bonding, a second resin paste 42 is applied to a surface of the second carrier film 52 by the second applicator 2b including a doctor blade, so that the second resin paste layer 42L is formed.

By pressing the thus-formed laminate 60 with an impregnating machine 3, the random mat 30 is impregnated with the first resin paste 41 and the second resin paste 42 so as to become an impregnated random mat. The impregnated random mat is wound on a bobbin. Instead of being wound on a bobbin, the impregnated random mat can be folded and placed in a container.

The first carrier film 51 and the second carrier film 52 may be made of, for example, a polyolefin such as polyethylene or polypropylene, polyvinylidene chloride, polyvinyl chloride, or polyamide.

The weight per unit area of the random mat 30 and the thickness of the first resin paste layer 41L and the thickness of the second resin paste layer 42L are set in consideration of the weight per unit area and fiber content of the SMC to be produced.

A typical SMC has a weight per unit area within a range of 500 g/m² to 3500 g/m², a fiber content within a range of 40% by mass to 75% by mass, and a thickness within a range of 1 mm to 4 mm and particularly within a range of 1.5 mm to 3 mm.

In the above-explained procedure for producing the impregnated random mat, the LERC prepared in Step (i) is used as the first resin paste 41 and the second resin paste 42.

In a room at a temperature of more than or equal to 17°C and less than or equal to 28°C, in order to form the first resin paste layer 41L and the second resin paste layer 42L to uniform thickness, it is advantageous that the viscosity of the LERC is not too low. From this viewpoint, the viscosity of the LERC is preferably more than or equal to 0.1 Pa·s, more preferably more than or equal to 0.2 Pa·s, and still more preferably more than or equal to 0.5 Pa·s at 25°C.

### [Step (iii)]

In Step (iii), the prepreg is completed by thickening the LERC in the impregnated fiber reinforcement obtained in Step (ii). The LERC in the impregnated fiber reinforcement is, in other words, the LERC that has permeated the fiber reinforcement. The matrix in the prepreg is a thickened matter of LERC.

In the LERC after the thickening, that is, in the matrix of the prepreg, a property of curing due to reaction of an epoxy group is maintained. This is because at least some of epoxy groups that the epoxy resin mixed in the LERC has remain in the matrix. Also, the epoxy curing agent and the radically polymerizable liquid monomer which are mixed in the LERC remain in all or in part in the matrix of the prepreg.

Whether the epoxy group, the epoxy curing agent, and the radically polymerizable liquid monomer remain in the matrix can be confirmed with use of well-known analytical techniques including proton NMR (¹H-NMR), high-performance liquid chromatography (HPLC), and infrared spectroscopy (IR).

For example, if a ¹H-NMR spectrum of a component contained in the matrix is obtained and a peak derived from a proton of the epoxy group is found, it can be determined that the epoxy group is remaining.

For the radically polymerizable liquid monomer, for example, if the radically polymerizable liquid monomer has a vinyl group, a ¹H-NMR peak derived from a proton of the vinyl group can be used for determination.

The epoxy curing agent that has a low solubility in the LERC remains in the matrix mostly as an insoluble matter.

The matrix is usually not curable in the absence of the epoxy curing agent. Therefore, if the matrix has the property of curing due to heating, it can be determined that the epoxy curing agent mixed in the LERC that is a precursor of the matrix remains in the matrix.

Thickening of the LERC in Step (iii) is preferably carried out by keeping the impregnated fiber reinforcement at a predetermined thickening temperature. The thickening temperature is lower than a temperature at which an FRP product is compression-molded with use of the prepreg completed, that is, a curing temperature of the prepreg. The thickening temperature can be, for example, less than or equal to 80°C, less than or equal to 70°C, less than or equal to 60°C, less than or equal to 50°C, less than or equal to 40°C, or less than or equal to 30°C. In general, a thickening rate decreases as the thickening temperature decreases.

In a case where a radical polymerization initiator is mixed in the LERC, the thickening temperature is set to a temperature that is, for example, by more than or equal to 10°C, preferably by more than or equal to 20°C, and more preferably by more than or equal to 30°C lower than a ten-hour half-life temperature of the radical polymerization initiator. This is intended to prevent, in Step (iii), the radically polymerizable liquid monomer from being substantially polymerized.

The thickening temperature in a case where a plurality of radical polymerization initiators are mixed in the LERC is set at a temperature that is, for example, more than or equal to 10°C, preferably more than or equal to 20°C, and more preferably more than or equal to 30°C lower than the ten-hour half-life temperature of a radical polymerization initiator having the lowest ten-hour half-life temperature among the radical polymerization initiators.

In a case where the SMC is produced as the prepreg, the LERC is thickened while the impregnated random mat is sandwiched between two carrier films. At this time, the LERC is thickened, until the LERC having a low viscosity does not adhere to any surface of the carrier films when the carrier films are peeled off from the impregnated random mat.

The two carrier films used in production of the SMC are not removed after completion of the impregnation in Step (ii), and are each utilized as a protection film of the impregnated random mat and the prepreg completed. Usually the carrier films are first removed in a stage in which the prepreg is used in production of the FRP product.

A thickening time for thickening at the predetermined thickening temperature can be set to a time during which a viscosity at 25°C of an LERC having the same composition as the LERC used in impregnation in Step (ii) and being placed in a container and kept at the same temperature as the predetermined thickening temperature becomes preferably more than or equal to 2000 Pa·s, more preferably more than or equal to 3000 Pa·s, and still more preferably more than or equal to 4000 Pa·s, and preferably less than or equal to 20000 Pa·s, more preferably less than or equal to 10000 Pa·s, and still more preferably less than or equal to 8000 Pa-s.

Setting the thickening time in this way makes it possible to obtain an SMC from which the carrier films can be peeled cleanly in a room at a temperature of 17°C to 28°C and which exhibits moderate softness (which can be expressed as good drape properties).

The thickening time is not particularly limited, and for example, taking a time longer than two weeks for Step (iii) is acceptable. However, in view of quickly detecting a thickening defect when the thickening defect occurs, the thickening time is preferably shorter, preferably within 2 weeks, more preferably within 1 week, and still more preferably within 4 days.

In Step (iii), the LERC thickens mainly due to the action of the thickening agent. Partial polymerization of the radically polymerizable liquid monomer may contribute to the thickening, but it is not an expected function of the radically polymerizable liquid monomer. The radically polymerizable liquid monomer remains in the matrix and acts like a plasticizing agent so as to function to impart softness to the prepreg.

### [Liquid epoxy resin composition]

The following will explain each of the components that are mixed in the LERC in Step (i).

### [Epoxy resin]

As is well known to a person skilled in the art, an epoxy resin is a thermosetting resin comprising a compound having an epoxy group (hereinafter, referred to also as "epoxy compound") and is usually a mixture containing two or more kinds of compounds.

For example, a bisphenol A epoxy resin is a mixture of compounds which are represented by the general formula (a) below and each of which has different n in the formula (a). When average n in the mixture is more than or equal to 1.8, the bisphenol A epoxy resin is solid at room temperature. A common commercial bisphenol A liquid epoxy resin is a mixture which contains, as a main component, a compound represented by formula (a) below, where n = 0, i.e., bisphenol A diglycidyl ether, and a small amount of a component having n = 1 and the like, and in which the average n is approximately 0.1 to 0.2. It is known that a highly purified bisphenol A diglycidyl ether crystallizes at room temperature.

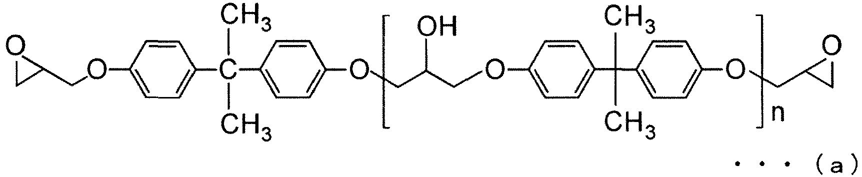

A mixture which is obtained by mixing two commercial epoxy resins is also an epoxy resin. In a case where one of the two commercial epoxy resins is solid and the other is liquid, whether the mixture becomes solid or liquid is determined by a mixing ratio and composition of each of the commercial epoxy resins. When the mixing ratio of the liquid one is increased, the probability that the mixture becomes liquid is usually higher.

The total amount of the epoxy resin mixed in the LERC is, for example, more than or equal to 50 wt% of a whole of the liquid epoxy resin composition, and can be more than or equal to 60 wt%, more than or equal to 65 wt%, more than or equal to 70 wt%, or more than or equal to 75 wt% of the whole of the liquid epoxy resin composition. The viscosity of the epoxy resin mixed greatly affects the viscosity of the LERC.

The epoxy resin mixed in the LERC is not limited to any particular kind and various kinds of epoxy resins including a bisphenol type epoxy resin, a naphthalene type epoxy resin, a biphenyl type epoxy resin, a novolac type epoxy resin, a glycidylamine type epoxy resin, an epoxy resin having an oxazolidone ring structure, an alicyclic epoxy resin, and an aliphatic epoxy resin can be used.

In a case where a plurality of epoxy resins having viscosities different from each other are mixed together, it is typical that when an epoxy resin having a lower viscosity is mixed at a higher mixing ratio, a resultant mixture has a lower viscosity.

In a suitable example, a bisphenol type epoxy resin including a bisphenol A epoxy resin or a bisphenol F epoxy resin is mixed in the LERC. Some commercial bisphenol type epoxy resins have a low viscosity at 25°C of less than or equal to 5 Pa·s.

More than or equal to 50 wt%, more than or equal to 60 wt%, more than or equal to 65 wt%, more than or equal to 70 wt%, or more than or equal to 75 wt% of a total of the epoxy resins mixed in the LERC can be bisphenol type epoxy resins.

The bisphenol type epoxy resin, particularly the bisphenol A epoxy resin has advantages such as a relatively smaller shrinkage during curing and a relatively better heat resistant property of the cured product.

Examples of commercial products of the bisphenol A epoxy resin include, but are not limited to, "jER" (registered trademark) 826, jER827, jER828, jER834, and jER 1001 (which are manufactured by Mitsubishi Chemical Corporation), "EPICLON" (registered trademark) 850 (which is manufactured by DIC Corporation), and "Epotohto" (registered trademark) YD-128 (which is manufactured by NIPPON STEEL Chemical & Material CO., LTD.).

### [Epoxy curing agent]

As the epoxy curing agent, preferably, a latent curing agent is used.

The latent curing agent is a solid which, at normal temperature, has low solubility in the epoxy resin, but when heated, the latent curing agent melts or dissolves in the epoxy resin to exhibits a function as a curing agent.

In a case where a latent curing agent appropriately selected is used, the rise temperature of the viscosity-temperature curve of the LERC can exceed 90°C. As a result, an effect of the epoxy curing agent on the thickening of the LERC in Step (iii) is reduced. This makes it easy to control the thickening and in addition, improves storage stability of the prepreg completed.

Typical examples of the latent curing agent include various types of imidazoles, dicyandiamide, and a boron trifluoride-amine complex.

The imidazoles are each a compound having an imidazole ring. The imidazoles include imidazolium salts, imidazole complexes, and the like, in addition to substituted imidazoles in each of which a hydrogen atom of an imidazole is replaced by a substituent.

Suitable examples of the substituted imidazoles that serve as the latent curing agent include substituted imidazols each having, in a molecule thereof, an aromatic ring that may be a heteroaromatic ring, such as 2,4-diamino-6-[2'-methylimidazolyl-(1')]-ethyl-s-triazine, 2-phenyl-4-methylimidazole, 2-phenyl-4-methyl-5-hydroxymethylimidazole, 2-phenyl-4-benzyl-5-hydroxymethylimidazole, 2-phenyl-4,5-dihydroxymethylimidazole, 2-p-tolyl-4-methyl-5-hydroxymethylimidazole, 2-p-tolyl-4,5-dihydroxymethylimidazole, 2-m-tolyl-4-methyl-5-hydroxymethylimidazole, 2-m-tolyl-4,5-dihydroxymethylimidazole, and 1-cyanoethyl-2-phenylimidazole.

Imidazolium salts such as 1-cyanoethyl-2-ethyl-4-methylimidazoliumtrimellitate, 1-cyanoethyl-2-undecylimidazoliumtrimellitate, and 1-cyanoethyl-2-phenylimidazoliumtrimellitate are also suitable examples of an imidazole latent curing agent.

Suitable examples of the imidazole latent curing agent also include: isocyanuric acid adducts of various substituted imidazoles, such as 2-phenylimidazole, 2-methylimidazol, 2-phenyl-4,5-dihydroxymethylimidazole, and 2-phenyl-4-methyl-5-hydroxymethylimidazole; and in particular, isocyanuric acid adducts of substituted imidazoles each having a triazine ring, such as 2,4-diamino-6-(2'-methylimidazolyl-(1'))-ethyl-s-triazine, 1-(4,6-diamino-s-triazine-2-yl)ethyl-2-undecylimidazole and 2,4-diamino-6-[2-(2-ethyl-4-methyl-1-imidazolyl)ethyl]-s-triazine.

Another suitable example of the latent curing agent is an amine adduct. The amine adduct is a product of a reaction in which an imidazole and/or a tertiary amine is reacted with an epoxy resin and/or an isocyanate so as to have a higher molecular weight. The amine adduct has a relatively low solubility in the epoxy resin.

One type of the latent curing agent can be used alone, or two or more types of the latent curing agent can be used in combination.

When dicyandiamide is used as the latent curing agent, a urea derivative, such as 4,4'-methylenebis(phenyldimethyl urea) and 2,4-bis(3,3-dimethylureido)toluene, can preferably be used as a curing accelerator.

In the LERC, in addition to the latent curing agent, an epoxy curing agent other than the latent curing agent can be mixed.

### [Thickening agent]

The thickening agent is a component that functions to increase the viscosity of the LERC in Step (iii). Thickening with use of the thickening agent affects a viscosity characteristic of the matrix when the prepreg completed is heated. This in turn affects the quality of the FRP product which is obtained by compression molding of the prepreg.

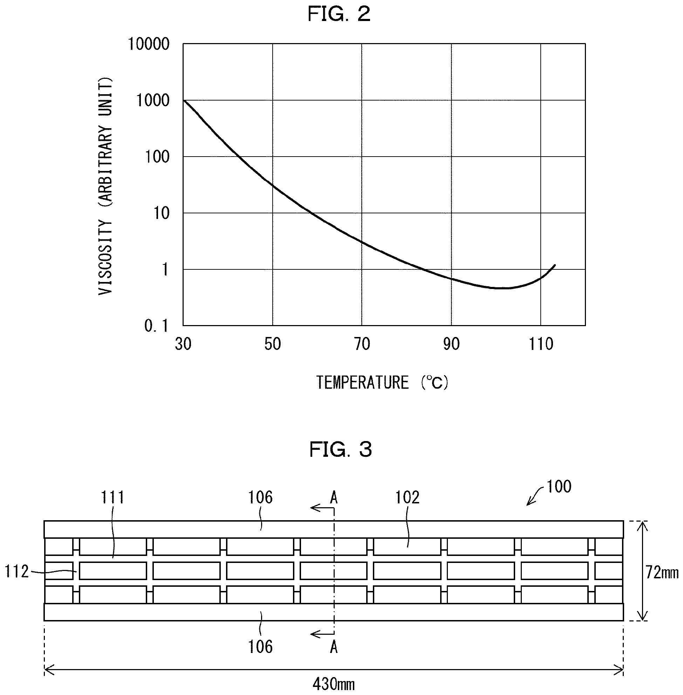

Fig. 2 is a graph showing a typical viscosity-temperature curve, which is obtained in a case where the viscosity of a thickened matter which is obtained by thickening the liquid epoxy resin composition is measured while increasing the temperature.

As understood from Fig. 2, when the prepreg is heated in a mold, the viscosity of the matrix decreases at first, and then turns to increase when a curing reaction is initiated by the action of the epoxy curing agent. The temperature at which the viscosity of the matrix turns from decreasing to increasing can exceed 90°C by use of the latent curing agent.

Meanwhile, flow of the prepreg in the mold occurs before the viscosity of the matrix increases, that is, in a stage in which the temperature has only increased to approximately 70°C to 80°C. When the viscosity of the matrix in a temperature range of 70°C to 80°C is too low, the fiber reinforcement does not flow together with the matrix, and the matrix is squeezed out from the fiber reinforcement. As a result, the uniformity of a fiber content in the FRP product to be molded deteriorates, and in a severe case, a part that does not contain any fiber is formed.

This problem is likely to occur in a case where a prepreg is produced with use of an LERC in which an epoxy resin comprising an epoxy compound having an aromatic ring in a structure, such as a bisphenol type epoxy resin, is mixed. Such an LERC is thickened, only with use of a small amount of the thickening agent, such that the viscosity becomes sufficiently high at a temperature in the vicinity of room temperature. However, in a case where the LERC is thickened so as to have an optimal viscosity at a temperature in the vicinity of room temperature, it is possible to obtain only a thickened matter whose viscosity decreases to be extremely low when heated to 70°C. The inventors of the present invention have inferred that this is because in an epoxy compound having an aromatic ring, molecular interactions largely depend on temperature.

The inventors have found, in disregard to an issue that the viscosity of the matrix near room temperature becomes too high, that in order to solve the above problem alone, it is sufficient to increase the amount of the thickening agent to sufficiently increase the 70°C viscosity of the LERC.

The 70°C viscosity refers to a viscosity of a thickened matter at 70°C which is measured while increasing temperature at a rate of 2°C/min after the thickened matter is obtained by keeping the LERC at 25°C so as to be thickened to have a viscosity within a range of 2000 Pa·s to 8000 Pa·s at 25°C.

According to the above finding, it is preferable to set the amount of the thickening agent mixed in the LERC so that the 70°C viscosity of the LERC is more than or equal to 10 Pa·s, further more than or equal to 20 Pa·s, further more than or equal to 30 Pa·s, and further more than or equal to 50 Pa·s. The amount of the thickening agent mixed can be an amount which leads to the 70°C viscosity of more than or equal to 100 Pa·s, more than or equal to 200 Pa·s, or more than or equal to 300 Pa·s.

In a case where the thickening agent is mixed in the LERC so that the 70°C viscosity may be sufficiently high, it is possible to further obtain a secondary effect of decreasing an amount of a burr produced in compression molding of the FRP product with use of the prepreg completed.

In order to prevent too much reduction of fluidity of the prepreg in the temperature range of 70°C to 80°C, the amount of the thickening agent mixed in the LERC may be set so that preferably, the 70°C viscosity does not exceed 1000 Pa·s.

In Step (iii), the radically polymerizable liquid monomer is able to remain in the LERC that is thickened due to the action of the thickening agent, because the thickening agent does not use radical polymerization as a thickening mechanism. A compound that is a component of the thickening agent produces a compound having a larger molecular weight to thereby thicken the LERC not by radical polymerization of itself but by reaction with an epoxy compound and/or with another compound that is mixed together in the LERC.

Suitable examples of the thickening agent include a carboxylic acid anhydride, an amine compound, and a polyisocyanate. These thickening agents have a relatively good thickening action even at a temperature of less than or equal to 30°C. Preferably, the polyisocyanate is mixed in the LERC together with a polyol.

Examples of the carboxylic acid anhydride that can preferably be used as the thickening agent include methyltetrahydrophthalic anhydride and methylhexahydrophthalic anhydride. These carboxylic acid anhydrides each have a viscosity at 25°C of as low as less than 0.5 Pa·s and, therefore, also act to reduce the viscosity of the LERC for a while after the preparation thereof. A carboxylic acid anhydride other than the above carboxylic acid anhydrides can be also used as a thickening agent.

The carboxylic acid anhydride is preferably mixed in the LERC together with a tertiary amine. The tertiary amine catalyzes a reaction between the carboxylic acid anhydride and the epoxy compound, and accelerates thickening of the LERC. The tertiary amine may be a glycidylamine.

Thickening with use of the carboxylic acid anhydride occurs when the carboxylic acid anhydride forms a bond with the epoxy compound. Therefore, when the LERC is thickened, the carboxylic acid anhydride in the LERC is consumed.

Examples of the amine compound that can preferably be used as the thickening agent include, but are not limited to, isophoron diamine, bis(4-aminocyclohexyl)methane, and 1,3-bis(aminomethyl)cyclohexane. See Patent Literatures 5 and 6 described earlier, for the amine compound that can be used as the thickening agent.

Thickening with use of the amine compound occurs when the amine compound forms a bond with the epoxy compound. Therefore, when the LERC is thickened, the amine compound that is added as the thickening agent in the LERC is consumed.

Examples of the polyisocyanate that can preferably be used as the thickening agent include, but are not limited to, diisocyanates having an aromatic ring in a molecular structure, such as bis(4-isocyanatophenyl)methane and toluene diisocyanate.

Examples of the polyol that may be mixed in the LERC together with the polyisocyanate include, but are not limited to, ethylene glycol, polyethylene glycol, isosorbide, neopentyl glycol, cyclohexanediol, cyclohexanedimethanol, 1,4-butanediol, 1,5-pentanediol, 3-methyl-1,5-pentanediol, and 1,6-hexanediol.

Thickening with use of the polyisocyanate occurs when the polyisocyanate forms a bond with the epoxy compound or with the polyol that is mixed together with the polyisocyanate. Therefore, when the LERC is thickened, the polyisocyanate in the LERC is consumed.

### [Radically polymerizable liquid monomer]

A radically polymerizable liquid monomer that is appropriate has a viscosity at 25°C of, for example, less than or equal to 1 Pa·s, preferably less than or equal to 0.5 Pa·s, and more preferably less than or equal to 0.25 Pa·s, and acts like a plasticizing agent in the matrix of the prepreg completed. That is, the radically polymerizable liquid monomer that is appropriate has a role in enhancing the softness at room temperature of the matrix comprising the LERC that has been thickened with use of the thickening agent in an amount that makes the 70°C viscosity sufficiently high, and consequently improving the drape properties of the prepreg.

The radically polymerizable liquid monomer has the action of reducing the viscosity of the matrix, but does not substantially reduce the strength and elastic modulus at room temperature of FRP obtained by curing the prepreg. This is not limited to a case in which the radical polymerization initiator is mixed in the LERC together with the radically polymerizable liquid monomer.

Suitable examples of the radically polymerizable liquid monomer include (meth)acrylate and an allyl ester, and more preferably (meth)acrylate in view of faster reaction.

In a situation in which odor does not matter, it is possible to use styrene as the radically polymerizable liquid monomer.

It is possible to refer to a patent literature (International Publication No. WO 2018/070076) which states that a radically polymerizable monomer having a flame point of more than or equal to 100°C as measured by the Cleveland open method has a particularly light odor.

The radically polymerizable liquid monomer is more likely to become volatile when the molecular weight is smaller. Therefore, it is desirable that the molecular weight of the radically polymerizable liquid monomer is not too small for the purpose of reducing the odor of and increasing stability of the LERC and the prepreg completed. From this viewpoint, the molecular weight of the radically polymerizable liquid monomer is preferably more than or equal to 150 and more preferably more than or equal to 200.

The radically polymerizable liquid monomer may be monofunctional or multifunctional. Examples of monofunctional (meth)acrylate include, but are not limited to, methyl methacrylate, ethyl methacrylate, n-butyl methacrylate, i-butyl methacrylate, t-butyl methacrylate, 2-ethyl hexyl methacrylate, phenyl methacrylate, benzyl methacrylate, cyclohexyl methacrylate, isobornyl methacrylate, tetrahydrofurfuryl methacrylate, 2-hydroxyethyl methacrylate, hydroxypropyl methacrylate, 1,3-butanediol dimethacrylate, ethylene glycol dimethacrylate, methyl acrylate, ethyl acrylate, n-butyl acrylate, i-butyl acrylate, t-butyl acrylate, 2-ethyl hexyl acrylate, benzyl acrylate, cyclohexyl acrylate, isobornyl acrylate, tetrahydrofurfuryl acrylate, 2-hydroxyethyl acrylate, and hydroxypropyl acrylate.

A multifunctional radically polymerizable liquid monomer is, in other words, a compound which has more than or equal to two ethylenically unsaturated groups per molecule. When compared with a monofunctional monomer, a multifunctional monomer has advantages of being less likely to remain unreacted when the prepreg is cured, and being less likely to impair the heat resistant property of the FRP which is obtained by curing the prepreg.

Suitable examples of the multifunctional radically polymerizable liquid monomer include, but are not limited to, multifunctional (meth)acrylate and diaryl phthalate.

Suitable examples of the multifunctional (meth)acrylate include, but are not limited to, dimethylol tricyclodecane dimethacrylate, neopentyl glycol dimethacrylate, 1,6-hexanediol dimethacrylate, dimethylol tricyclodecane diacrylate, neopentyl glycol diacrylate and 1,6-hexane diol diacrylate, which are bifunctional monomers, and trimethylolpropane trimethacrylate and trimethylolpropane triacrylate, which are trifunctional monomers.

The amount of the radically polymerizable liquid monomer mixed is set so that the prepreg completed through the thickening in Step (iii) has moderate softness.

Practically, the amount of the radically polymerizable liquid monomer mixed may be set so that a viscosity is, at 25°C, in a range of preferably more than or equal to 2000 Pa·s, more preferably more than or equal to 3000 Pa·s, and still more preferably more than or equal to 4000 Pa·s, and preferably less than or equal to 20000 Pa·s, more preferably less than or equal to 10000 Pa·s, and still more preferably less than or equal to 8000 Pa·s, the viscosity being a viscosity of an LERC having the same composition as the LERC used in impregnation in Step (ii) after being placed in a container and thickened at the same temperature and under the same time condition as used in Step (iii).

The radically polymerizable liquid monomer mixed in the LERC can include one type of the radically polymerizable liquid monomer or two or more types of the radically polymerizable liquid monomer.

### [Radical polymerization initiator]

In order to prevent the heat resistant property of the FRP obtained by curing the prepreg from being impaired, it is desirable to minimize an amount of an unreacted radically polymerizable liquid monomer left in the FRP. From this viewpoint, it is preferable to mix the radical polymerization initiator in the LERC.

The amount of the radical polymerization initiator mixed in the LERC may be set, as appropriate, for example, in a range of 0.05% to 1.5% in molar ratio with respect to the radically polymerizable liquid monomer.

In consideration of the fact that a desired molding time in compression molding is less than or equal to 10 minutes, and further, less than or equal to 5 minutes, in order to polymerize the radically polymerizable liquid monomer during molding, it is preferable that a one-minute half-life temperature of the radical polymerization initiator be less than or equal to a temperature in molding the FRP product from the prepreg.

The one-minute half-life temperature is a temperature at which a half life of the radical polymerization initiator is one minute when the radical polymerization initiator is pyrolyzed at a fixed temperature.

Since a molding temperature in compression molding is typically more than or equal to 130°C, a radical polymerization initiator having a one-minute half-life temperature of less than or equal to 130°C is particularly preferable.

As described above, when the prepreg is heated in the mold, the viscosity of the matrix decreases at first, and then turns to increase when a curing reaction is initiated by the action of the epoxy curing agent. In a suitable example, polymerization of the radically polymerizable liquid monomer is initiated before the viscosity of the matrix starts to increase due to the action of the epoxy curing agent. This makes it possible to increase the reaction rate of the radically polymerizable liquid monomer and to effectively reduce the radically polymerizable liquid monomer that remains unreacted in the FRP which is obtained by curing the prepreg.

Consider an LERC in which the radical polymerization initiator is mixed so that polymerization of the radically polymerizable liquid monomer is initiated before the viscosity starts to increase due to the action of the epoxy curing agent. When (i) such an LERC is kept at 25°C so as to be thickened to have a viscosity within a range of 2000 Pa·s to 8000 Pa·s, so that a thickened matter is obtained, and (ii) the viscosity of the thickened matter is measured while increasing temperature at a rate of 2°C/min, the temperature at which the viscosity turns from decreasing to increasing is lower than that in the case of an LERC which is prepared and thickened in the same way except that the radical polymerization initiator is not mixed.

In a case where the matrix of the prepreg contains the radical polymerization initiator, it is possible to obtain the effect of reducing the amount of a burr produced when the FRP product is produced by compression molding with use of the prepreg. This is thought to be because the radically polymerizable liquid monomer polymerizes during molding, so that the matrix has a higher viscosity at a faster timing. This effect is particularly noticeable when the matrix is formed from an LERC in which the radical polymerization initiator is mixed so as to make a 90°C viscosity higher than the 70°C viscosity.

The 90°C viscosity refers to a viscosity of a thickened matter at 90°C which is measured while increasing temperature at a rate of 2°C/min after the thickened matter is obtained by keeping the LERC at 25°C so as to be thickened to have a viscosity within a range of 2000 Pa·s to 8000 Pa·s at 25°C.

In terms of the storage stability of the prepreg completed, the ten-hour half-life temperature of the radical polymerization initiator is preferably more than or equal to 60°C, more preferably more than or equal to 70°C, and still more preferably more than or equal to 80°C. The ten-hour half-life temperature is a temperature at which a half life of a radical polymerization initiator is ten hours when the radical polymerization initiator is pyrolyzed at a fixed temperature.

In order to improve the storage stability of the prepreg, it is possible to add a polymerization inhibitor together with the radical polymerization initiator to the LERC. Suitable examples of the polymerization inhibitor include, but are not limited to, quinones including hydroquinones, benzoquinones, and various derivatives thereof, and nitroso compounds.

Typical examples of the nitroso compounds include nitrosophenols such as p-nitrosophenol and 2-methyl-4 nitrosophenol and N-nitroso compounds such as N-nitrosodiphenylamine and N-nitrosophenylhydroxyamine.

Particularly preferable examples of the polymerization inhibitor include an N-nitrosophenylhydroxylamine aluminum salt ([C₆H₅N(NO)O]₃Al), which is one type of the N-nitroso compounds.

In a case where an amount of the polymerization inhibitor added is too small, the storage stability of the prepreg is not sufficiently improved. Conversely, in a case where the amount of the polymerization inhibitor added is too large, the action of the radical polymerization initiator is blocked. In consideration of these, the amount of the polymerization inhibitor added can be set, for example, within a range of 0.02% to 25% in molar ratio with respect to the radically polymerizable liquid monomer.

In a sheet prepreg like the SMC, it is possible to improve the storage stability by using oxygen in the atmosphere as the polymerization inhibitor instead of or in addition to adding the above-described polymerization inhibitor to the LERC. For this purpose, it is preferable to use, as a protection film that protects a surface of the sheet prepreg, a polyolefin film having a high oxygen permeability such as a polyethylene film or a polypropylene film.

Suitable examples of the radical polymerization initiator include dilauroyl peroxide [116°C; 62°C], 1,1,3,3-tetramethyl butyl peroxy-2-ethyl hexanoate [124°C; 65°C], t-hexyl peroxy-2-ethylhexanoate [133°C; 70°C], t-butyl peroxy-2-ethylhexanoate [134°C; 72°C], 1,1-di(t-hexylperoxy)-3,3,5-trimethylcyclohexane [147°C; 87°C] and 1,1-di(t-hexylperoxy)-cyclohexane [149°C; 87°C]. The above two temperatures indicated in parentheses after each compound indicate the one-minute half-life temperature and the ten-hour half-life temperature, respectively.

From the viewpoint of reducing a volatile organic compound (VOC) content of the FRP product which is molded from the prepreg completed, preferable examples of the radical polymerization initiator include a diacyl peroxide that is represented by the following chemical formula: R¹C(=O)OOC(=O)R², in particular, the diacyl peroxide that is represented by the aforesaid formula, where R¹ and R² each are a hydrocarbon group which has more than or equal to 10 carbon atoms and which may have a substitutional group. R¹ and R² can be the same or different. Suitable examples of such a diacyl peroxide include, but are not limited to, dilauroyl peroxide and distearoyl peroxide.

### 2. Prepreg

Another embodiment of the present invention relates to a prepreg comprising a fiber reinforcement and a matrix.

The prepreg according to an embodiment is a prepreg that is produced by the method described in the previous section. Therefore, the matrix of the prepreg is made of an epoxy resin composition that is thickened with use of a thickening agent and contains an epoxy curing agent and a radically polymerizable liquid monomer.

The previous section can be referred to for suitable examples of a material and examples of a form of the fiber reinforcement contained in the prepreg according to an embodiment.

The prepreg according to an embodiment can be an SMC, and in this case, contains a random mat as the fiber reinforcement. The random mat is preferably made of carbon fiber bundles. Further, the random mat can be made of only the carbon fiber bundles but is not limited to such a configuration. The carbon fiber bundles have a fiber length within a range of, for example, 5 mm to 100 mm.

In a case where the prepreg according to an embodiment is an SMC, the prepreg typically has a weight per unit area within a range of 500 g/m² to 3500 g/m², a fiber content within a range of 40% by mass to 75% by mass, and a thickness within a range of 1 mm to 4 mm, and particularly within a range of between 1.5 mm and 3 mm.

The matrix of the prepreg according to an embodiment is a thickened matter of an LERC in which a plurality of components are mixed. The components include an epoxy resin, an epoxy curing agent, a thickening agent, and a radically polymerizable liquid monomer. In the matrix, at least some of epoxy groups which the epoxy resin has, at least part of the epoxy curing agent, and at least some of radically polymerizable liquid monomers remain.

A total amount of the epoxy resin mixed in the LERC is, for example, more than or equal to 50 wt% of a whole of the LERC, and may be more than or equal to 60 wt%, more than or equal to 65 wt%, more than or equal to 70 wt%, or more than or equal to 75 wt% of the whole of the LERC.

In a suitable example, a bisphenol type epoxy resin such as a bisphenol A epoxy resin or a bisphenol F epoxy resin is mixed in the LERC. More than or equal to 50 wt%, more than or equal to 60 wt%, more than or equal to 65 wt%, more than or equal to 70 wt%, or more than or equal to 75 wt% of a total of the epoxy resins mixed in the LERC can be bisphenol type epoxy resins.

Preferably, the epoxy curing agent mixed in the LERC includes a latent curing agent. See the previous section for concrete examples of the latent curing agent.

Suitable examples of the thickening agent mixed in the LERC include a carboxylic acid anhydride, an amine compound, and a polyisocyanate. The polyisocyanate is preferably mixed in the LERC together with a polyol. See the previous section for concrete examples of these thickening agents.

The radically polymerizable liquid monomer contained in the matrix of the prepreg according to an embodiment has a viscosity at 25°C of, for example, less than or equal to 1 Pa·s, preferably less than or equal to 0.5 Pa·s, and more preferably less than or equal to 0.25 Pa·s, and acts like a plasticizing agent in the matrix. That is, the radically polymerizable liquid monomer has a role in enhancing softness at room temperature of the matrix and consequently improving drape properties of the prepreg.

Suitable examples of the radically polymerizable liquid monomer include (meth)acrylate and an allyl ester, and more preferably (meth)acrylate in view of faster reaction.

The radically polymerizable liquid monomer may be monofunctional or multifunctional. When compared with a monofunctional monomer, a multifunctional monomer has advantages of being less likely to remain unreacted when the prepreg is cured, and being less likely to impair the heat resistant property of the FRP which is obtained by curing the prepreg.

Suitable examples of the multifunctional radically polymerizable liquid monomer include, but are not limited to, multifunctional (meth)acrylate and diaryl phthalate.

See the previous section for concrete examples of the radically polymerizable liquid monomer.

It is desirable that the molecular weight of the radically polymerizable liquid monomer is not too small for the purpose of reducing odor of and increasing stability of the prepreg. From this viewpoint, the molecular weight of the radically polymerizable liquid monomer is preferably more than or equal to 150 and more preferably more than or equal to 200.

The prepreg according to an embodiment preferably further contains a radical polymerization initiator in the matrix.

It is preferable that a one-minute half-life temperature of the radical polymerization initiator be less than or equal to a temperature in molding the FRP product from the prepreg. Since a molding temperature in compression molding is typically more than or equal to 130°C, a radical polymerization initiator having a one-minute half-life temperature of less than or equal to 130°C is particularly preferable.

A ten-hour half-life temperature of the radical polymerization initiator is preferably more than or equal to 60°C, more preferably more than or equal to 70°C, and still more preferably more than or equal to 80°C.

See the previous section for concrete examples of the radical polymerization initiator.

Preferably, the radical polymerization initiator which the prepreg according to an embodiment contains in the matrix is not a photo radical polymerization initiator.

From the viewpoint of reducing a VOC content of the FRP product which is molded from the prepreg, preferable examples of the radical polymerization initiator include a diacyl peroxide that is represented by the following chemical formula: R¹C(=O)OOC(=O)R², in particular, the diacyl peroxide that is represented by the aforesaid formula, where R¹ and R² each are a hydrocarbon group which has more than or equal to 10 carbon atoms and which may have a substitutional group. R¹ and R² can be the same or different. Suitable examples of such a diacyl peroxide include, but are not limited to, dilauroyl peroxide and distearoyl peroxide.

The prepreg according to an embodiment may further contain, in the matrix, a polymerization inhibitor together with the radical polymerization initiator.

See the previous section for concrete examples of the polymerization inhibitor.

In case where the prepreg is a sheet prepreg like an SMC, it is possible to improve the storage stability by using oxygen in the atmosphere as the polymerization inhibitor instead of or in addition to adding the polymerization inhibitor to the matrix. For this purpose, it is preferable to use, as a protection film that protects a surface of the sheet prepreg, a polyolefin film having a high oxygen permeability such as a polyethylene film or a polypropylene film.

In the prepreg according to an embodiment, the matrix has a viscosity at 25°C of preferably more than or equal to 2000 Pa·s, more preferably more than or equal to 3000 Pa·s, and still more preferably more than or equal to 4000 Pa·s. The viscosity at 25°C of the matrix is also preferably less than or equal to 20000 Pa·s, more preferably less than or equal to 10000 Pa·s, and still more preferably less than or equal to 8000 Pa·s.

It is possible to regard, as the viscosity of the matrix, a viscosity obtained when the LERC, which is a precursor of the matrix, is placed in a container and thickened under the same conditions as the thickening that is carried out in production of the prepreg.

A viscosity of the LERC when being kept at 25°C for more than or equal to 6 days and less than or equal to 15 days from the preparation thereof is, at 25°C, preferably more than or equal to 2000 Pa·s, more preferably more than or equal to 3000 Pa·s, and still more preferably more than or equal to 4000 Pa·s, and preferably less than or equal to 20000 Pa·s, more preferably less than or equal to 10000 Pa·s, and still more preferably less than or equal to 8000 Pa·s.

The prepreg according to an embodiment contains, in the matrix, an epoxy curing agent and a compound that has an epoxy group. When heat is applied to the prepreg, the matrix cures since the compound that has the epoxy group reacts due to the action of the epoxy curing agent, so that FRP is obtained.

As a molding method in production of an FRP product from the prepreg according to an embodiment, it is possible to preferably use press molding (also referred to as compression molding), but the method is not limited to this configuration. It is also possible to use molding methods other than press molding, such as autoclave molding.

The molding temperature in molding an FRP product from the prepreg according to an embodiment is preferably more than or equal to 130°C. Further, the molding temperature is preferably less than or equal to 180°C, more preferably less than or equal to 160°C, and still more preferably less than or equal to 150°C.

### 3. Summary of embodiments

Embodiments of the present invention include the following.

### [Embodiment 1]

A method for producing a prepreg comprising a fiber reinforcement and a matrix, the method including: obtaining an impregnated fiber reinforcement by impregnating the fiber reinforcement with a liquid epoxy resin composition which is a precursor material of the matrix; and thickening the liquid epoxy resin composition in the impregnated fiber reinforcement, wherein an epoxy resin, an epoxy curing agent, a thickening agent, and a radically polymerizable liquid monomer are mixed in the liquid epoxy resin composition, and the thickening is performed so that the epoxy curing agent and the radically polymerizable liquid monomer remain in the matrix.

### [Embodiment 2]

The method in accordance with embodiment 1, wherein the matrix comprises an epoxy group.

### [Embodiment 3]

The method in accordance with embodiment 1 or 2, wherein: the thickening comprises keeping the impregnated fiber reinforcement at a predetermined temperature for a predetermined time; and the liquid epoxy resin composition which has been kept at the predetermined temperature for the predetermined time has a viscosity at 25°C of more than or equal to 2000 Pa·s, preferably more than or equal to 3000 Pa·s, and more preferably more than or equal to 4000 Pa·s, and less than or equal to 20000 Pa·s, preferably less than or equal to 10000 Pa·s, and more preferably less than or equal to 8000 Pa·s. The viscosity is measured with use of a rheometer, under the following conditions: an oscillatory mode, an angular velocity of 10 rad/s, a fixed stress of 300 Pa, a plate diameter of 25 mm, and a distance between plates of 0.5 mm.

### [Embodiment 4]

The method in accordance with any one of embodiments 1 to 3, wherein a viscosity of the liquid epoxy resin composition when having been kept at 25°C for more than or equal to 6 days and less than or equal to 15 days from preparation thereof is, at 25°C, more than or equal to 2000 Pa·s, preferably more than or equal to 3000 Pa·s, and more preferably more than or equal to 4000 Pa·s, and less than or equal to 20000 Pa·s, preferably less than or equal to 10000 Pa·s, and more preferably less than or equal to 8000 Pa·s. The viscosity is measured with use of a rheometer, under the following conditions: an oscillatory mode, an angular velocity of 10 rad/s, a fixed stress of 300 Pa, a plate diameter of 25 mm, and a distance between plates of 0.5 mm.

### [Embodiment 5]

The method in accordance with any one of embodiments 1 to 4, wherein the matrix is plasticized by the radically polymerizable liquid monomer.

### [Embodiment 6]

The method in accordance with any one of embodiments 1 to 5, wherein the radically polymerizable liquid monomer comprises a (meth)acrylate.

### [Embodiment 7]

The method in accordance with embodiment 6, wherein the (meth)acrylate comprises a multifunctional (meth)acrylate.

### [Embodiment 8]

The method in accordance with embodiment 7, wherein the multifunctional (meth)acrylate comprises a bifunctional (meth)acrylate.

### [Embodiment 9]

The method in accordance with any one of embodiments 1 to 8, wherein the radically polymerizable liquid monomer comprises a radically polymerizable liquid monomer that has a molecular weight of more than or equal to 150 and preferably more than or equal to 200.

### [Embodiment 10]

The method in accordance with any one of embodiments 1 to 9, wherein a viscosity of the liquid epoxy resin composition measured within 5 minutes from preparation thereof is, at 25°C, less than or equal to 15 Pa·s, preferably less than or equal to 10 Pa·s, and more preferably less than or equal to 5 Pa·s. The viscosity is measured with use of a rheometer, under the following conditions: an oscillatory mode, an angular velocity of 10 rad/s, a fixed stress of 300 Pa, a plate diameter of 25 mm, and a distance between plates of 0.5 mm.

### [Embodiment 11]

The method in accordance with any one of embodiments 1 to 10, wherein when a viscosity of a thickened matter obtained by keeping the liquid epoxy resin composition at 25°C from immediately after preparation thereof so as to thicken to have a viscosity at 25°C within a range of 2000 Pa·s to 8000 Pa·s is measured while increasing temperature at a rate of 2°C/min, the viscosity at 70°C is more than or equal to 10 Pa·s, preferably more than or equal to 20 Pa·s, more preferably more than or equal to 30 Pa·s, and still more preferably more than or equal to 50 Pa·s, and preferably less than or equal to 1000 Pa·s. The viscosity is measured with use of a rheometer, under the following conditions: an oscillatory mode, an angular velocity of 10 rad/s, a fixed stress of 300 Pa, a plate diameter of 25 mm, and a distance between plates of 0.5 mm.

### [Embodiment 12]

The method in accordance with any one of embodiments 1 to 11, wherein a radical polymerization initiator is further mixed in the liquid epoxy resin composition.

### [Embodiment 13]

The method in accordance with embodiment 12, wherein the radical polymerization initiator comprises a radical polymerization initiator having a one-minute half-life temperature of less than or equal to 130°C.

### [Embodiment 14]

The method in accordance with embodiment 12 or 13, wherein when (i) a temperature at which a viscosity of a thickened matter measured while increasing temperature at a rate of 2°C/min turns from decreasing to increasing is referred to as a first temperature, the thickened matter being obtained by keeping the liquid epoxy resin composition at 25°C from immediately after preparation thereof so as to thicken to have a viscosity at 25°C within a range of 2000 Pa·s to 8000 Pa·s and (ii) a temperature at which a viscosity of another thickened matter measured while increasing temperature at a rate of 2°C/min turns from decreasing to increasing is referred to as a second temperature, the another thickened matter being obtained by thickening in the same manner as the liquid epoxy resin composition of a control epoxy resin composition prepared in the same manner as the liquid epoxy resin composition except that the radical polymerization initiator is not mixed, the first temperature is lower than the second temperature. The viscosity is measured with use of a rheometer, under the following conditions: an oscillatory mode, an angular velocity of 10 rad/s, a fixed stress of 300 Pa, a plate diameter of 25 mm, and a distance between plates of 0.5 mm.

### [Embodiment 15]

The method in accordance with any one of embodiments 12 to 14, wherein when a viscosity of a thickened matter obtained by keeping the liquid epoxy resin composition at 25°C from immediately after preparation thereof so as to thicken to have a viscosity at 25°C within a range of 2000 Pa·s to 8000 Pa·s is measured while increasing temperature at a rate of 2°C/min, the viscosity at 70°C is higher than the viscosity at 90°C. The viscosity is measured with use of a rheometer, under the following conditions: an oscillatory mode, an angular velocity of 10 rad/s, a fixed stress of 300 Pa, a plate diameter of 25 mm, and a distance between plates of 0.5 mm.

### [Embodiment 16]

The method in accordance with any one of embodiments 12 to 15, wherein the radical polymerization initiator has a ten-hour half-life temperature of more than or equal to 60°C.

### [Embodiment 17]

The method in accordance with any one of embodiments 12 to 16, wherein in the thickening, the impregnated fiber reinforcement is kept at a temperature that is lower than the ten-hour half-life temperature of the radical polymerization initiator by more than or equal to 10°C, preferably by more than or equal to 20°C, and more preferably by more than or equal to 30°C.

### [Embodiment 18]

The method in accordance with any one of embodiments 12 to 17, wherein the radical polymerization initiator comprises a diacyl peroxide that is represented by the following chemical formula: R¹C(=O)OOC(=O)R², where R¹ and R² each are a hydrocarbon group which has more than or equal to ten carbon atoms and which may have a substitutional group.

### [Embodiment 19]

The method in accordance with any one of embodiments 11 to 18, wherein a polymerization inhibitor is further mixed in the liquid epoxy resin composition.

### [Embodiment 20]

The method in accordance with any one of embodiments 1 to 19, wherein the epoxy resin comprises a bisphenol type epoxy resin.

### [Embodiment 21]

The method in accordance with any one of embodiments 1 to 20, wherein the epoxy curing agent comprises a latent curing agent.

### [Embodiment 22]

The method in accordance with embodiment 21, wherein the latent curing agent comprises at least one curing agent selected from the group consisting of imidazoles, dicyandiamide, boron trifluoride-amine complexes, and amine adducts.

### [Embodiment 23]

The method in accordance with any one of embodiments 1 to 22, wherein the thickening agent comprises a non-radically polymerizable compound.

### [Embodiment 24]

The method in accordance with any one of embodiments 1 to 23, wherein the thickening agent comprises a compound that reacts with a compound having an epoxy group to produce a compound having a larger molecular weight.

### [Embodiment 25]

The method in accordance with any one of embodiments 1 to 24, wherein the thickening agent comprises a carboxylic acid anhydride.

### [Embodiment 26]

The method in accordance with embodiment 25, wherein a tertiary amine is mixed in the liquid epoxy resin composition.

### [Embodiment 27]

The method in accordance with any one of embodiments 1 to 24, wherein the thickening agent comprises an amine compound.

### [Embodiment 28]

The method in accordance with any one of embodiments 1 to 24, wherein the thickening agent comprises a polyisocyanate.

### [Embodiment 29]

The method in accordance with embodiment 28, wherein a polyol is mixed in the liquid epoxy resin composition.

### [Embodiment 30]

The method in accordance with any one of embodiments 1 to 29, wherein the fiber reinforcement comprises carbon fibers.

### [Embodiment 31

The method in accordance with any one of embodiments 1 to 30, wherein the prepreg is a sheet molding compound.

### [Embodiment 32]

A prepreg produced by a method in accordance with any one of embodiments 1 to 30.

### [Embodiment 33]

A sheet prepreg which is produced by a method in accordance with any one of embodiments 12 to 19 and which uses, as a protection film that protects a surface of the sheet prepreg, a polyolefin film that may be a polyethylene film or a polypropylene film and.

### [Embodiment 34]

A prepreg comprising a fiber reinforcement and a matrix, the matrix being an epoxy resin composition comprising an epoxy curing agent and a radically polymerizable liquid monomer, the epoxy resin composition having been thickened with use of a thickening agent so as to have a viscosity at 25°C of more than or equal to 2000 Pa·s, preferably more than or equal to 3000 Pa·s, and more preferably more than or equal to 4000 Pa·s, and less than or equal to 20000 Pa·s, preferably less than or equal to 10000 Pa·s, and more preferably less than or equal to 8000 Pa·s. The viscosity is measured with use of a rheometer, under the following conditions: an oscillatory mode, an angular velocity of 10 rad/s, a fixed stress of 300 Pa, a plate diameter of 25 mm, and a distance between plates of 0.5 mm.

### [Embodiment 35]

The prepreg in accordance with embodiment 34, wherein the matrix is plasticized by the radically polymerizable liquid monomer.

### [Embodiment 36]

The prepreg in accordance with embodiment 34 or 35, wherein the radically polymerizable liquid monomer comprises a radically polymerizable liquid monomer that has a molecular weight of more than or equal to 150 and preferably more than or equal to 200.

### [Embodiment 37]

The prepreg in accordance with any one of embodiments 34 to 36, wherein the radically polymerizable liquid monomer comprises a (meth)acrylate.

### [Embodiment 38]

The prepreg in accordance with embodiment 37, wherein the (meth)acrylate comprises a multifunctional (meth)acrylate.

### [Embodiment 39]

The prepreg in accordance with embodiment 38, wherein the multifunctional (meth)acrylate comprises a bifunctional (meth)acrylate.

### [Embodiment 40]

The prepreg in accordance with any one of embodiments 34 to 39, wherein the matrix further comprises a radical polymerization initiator.

### [Embodiment 41]

The prepreg in accordance with embodiment 40, wherein the radical polymerization initiator comprises a radical polymerization initiator having a one-minute half-life temperature of less than or equal to 130°C.

### [Embodiment 42]

The prepreg in accordance with embodiment 40 or 41, wherein the radical polymerization initiator has a ten-hour half-life temperature of more than or equal to 60°C.

### [Embodiment 43]

The prepreg in accordance with any one of embodiments 40 to 42, wherein the radical polymerization initiator comprises a diacyl peroxide that is represented by the following chemical formula: R¹C(=O)OOC(=O)R², where R¹ and R² each are a hydrocarbon group which has more than or equal to ten carbon atoms and which may have a substitutional group.

### [Embodiment 44]

The prepreg in accordance with any one of embodiments 40 to 43, wherein the radical polymerization initiator is not a photo radical polymerization initiator.

### [Embodiment 45]

The prepreg in accordance with any one of embodiments 34 to 39, wherein the matrix comprises no radical polymerization initiator.

### [Embodiment 46]

The prepreg in accordance with any one of embodiments 40 to 44, wherein the matrix further comprises a polymerization inhibitor.

### [Embodiment 47]

The prepreg in accordance with any one of embodiments 34 to 46, wherein a bisphenol type epoxy resin is mixed in the epoxy resin composition.

### [Embodiment 48]

The prepreg in accordance with any one of embodiments 34 to 47, wherein the epoxy curing agent comprises a latent curing agent.

### [Embodiment 49]

The prepreg in accordance with embodiment 48, wherein the latent curing agent comprises at least one curing agent selected from the group consisting of imidazoles, dicyandiamide, boron trifluoride-amine complexes, and amine adducts.

### [Embodiment 50]

The prepreg in accordance with any one of embodiments 34 to 49, wherein the fiber reinforcement comprises carbon fibers.

### [Embodiment 51]

The prepreg in accordance with any one of embodiments 34 to 50, wherein the fiber reinforcement is a random mat.

### [Embodiment 52]

The prepreg in accordance with any one of embodiments 34 to 51, which is a sheet, and a surface of which is protected with a polyolefin film that may be a polyethylene film or a polypropylene film.

### [Embodiment 53]

The prepreg in accordance with any one of embodiments 34 to 52, being a sheet molding compound.

### [Embodiment 54]

The prepreg in accordance with any one of embodiments 34 to 53, having a thickness that is within a range of 1 mm to 4 mm and that may be within a range of 1.5 mm to 3 mm.

### 4. Results of experiments

The following description will explain experiments which were performed by the present inventors etc.

### [Initial viscosity of liquid epoxy resin composition]

With use of a rheometer (product name: HAAKE MARS 40 (both of "HAAKE" and "MARS" are registered trademarks)) manufactured by ThermoFisher Scientific K.K., the initial viscosity of the liquid epoxy resin composition was measured in an oscillatory mode. Conditions were set as follows: a temperature of 25°C, an angular velocity of 10 rad/s, a fixed stress of 300 Pa, a plate diameter of 25 mm, and a distance between plates of 0.5 mm.

Approximately 0.5 mL of the liquid epoxy resin composition which had just been prepared by mixing materials in a room at a temperature of approximately 25°C was loaded on the rheometer, and then, after it was confirmed that a plate temperature had reached 25°C, measurement was started. In all measurements, a time from preparation of the epoxy resin composition to the start of measurement was less than or equal to 5 minutes.

### [Viscosity of thickened matter of liquid epoxy resin composition at increased temperatures]

The liquid epoxy resin composition prepared was kept at 25°C to be thickened to have a viscosity at 25°C within a range of 2000 Pa-s to 8000 Pa·s, so that a thickened matter was obtained. Then, the viscosity of the thickened matter was measured while increasing temperature at a rate of 2°C/min from 30°C to 100°C with use of the rheometer (product name: HAAKE MARS 40) manufactured by ThermoFisher Scientific K.K. A mode of measurement was set to an oscillatory mode and conditions were set as follows: an angular velocity of 10 rad/s, a fixed stress of 300 Pa, a plate diameter of 25 mm, and a distance between plates of 0.5 mm.

### [Strength, elastic modulus, and glass transition temperature of cured resin]

The liquid epoxy resin composition immediately after preparation was vacuum defoamed first, and then injected into a 2-mm-thick gap formed between two 4-mm-thick glass plates with use of a spacer. Next, the liquid epoxy resin composition sandwiched between the two glass plates was placed in a hot air circulating thermostatic oven preheated to 70°C. Then, the temperature in the oven was increased such that a surface temperature of the glass plate was increased from 70°C to 140°C at a rate of 10°C/minute. Subsequently, the liquid epoxy resin composition was cured by heating inside of the oven so that the surface temperature of the glass plates was maintained at 140°C for another 30 minutes. The resin plate having a thickness of 2 mm was thus obtained. From this resin plate, a DMA test piece having a length of 60 mm and a width of 12.7 mm was cut out.

With use of DMA Q800 manufactured by TA Instruments, dynamic viscoelasticity analysis of this DMA test piece was carried out in a three-point bending mode, so that strength, elastic modulus (storage bending elastic modulus E') and glass transition temperature (E'-Tg) were measured.

Conditions for measurement were set as follows: a temperature increase rate of 5°C/minute, a frequency of 1 Hz, a strain of 0.05%, and a temperature of 25°C to 250°C.

E'-Tg represents a temperature at an intersection of an approximate straight line of a flat region and an approximate straight line of a region where log E' decreases sharply in a graph obtained by plotting the storage bending elastic modulus E' against the temperature.

### [VOC evaluation of cured resin]

A VOC test piece having a length of 50 mm and a width of 10 mm was cut out from the 2 mm-thick resin plate which had been prepared for obtaining the DMA test piece or from a 2 mm-thick resin plate which had been prepared in the same manner as the resin plate prepared for obtaining the DMA test piece.

The VOC test piece was placed and sealed in a glass vial having an internal volume of 20 mL, and then heated at 120°C for 5 hours. Thereafter, a VOC contained in the gas in the glass vial was quantified with use of a gas chromatograph mass spectrometer.

When an area of a peak that appeared on a total ion chromatogram was converted to a VOC amount, a calibration curve of toluene was used for each of all peaks for convenience.

### [Preparation of materials]

Materials shown in Table 1 below were prepared.

**[Table 1]**

| Material | Product name | Main component | Viscosity at room temperature (nominal value) | Supplier |
|---|---|---|---|---|
| Epoxy resin 1 | jER827 | bisphenol A epoxy resin | 9-11 Pa·s | Mitsubishi Chemical |
| Epoxy resin 2 | TETRAD (registered trademark)-X | N,N,N',N'-tetraglycidyl-m-xylenediamine | 1.6-2.6 Pa·s | Mitsubishi Gas Chemical |
| Epoxy curing agent 1 | AJICURE (registered trademark) PN-23J | amine adduct type latent curing agent for epoxy resin | - | Ajinomono Fine-Techno |
| Epoxy curing agent 2 | CUREZOL (registered trademark) 2MZA-PW | 2,4-diamino-6-[2'-methylimidazolyl-(1')]-ethyl-s-triazine | - | Shikoku Chemicals |
| Thickening agent | HN-2200 | 3 or 4-methyl-1,2,3,6-tetrahydrophthalic anhydride | 50-80 mPa·s | Showa Denko Materials |
| Radically polymerizable liquid monomer | Light Acrylate (registered trademark) DCP-A | dimethylol tricyclodecane diacrylate | 130-170 mPa·s | Kyoueisha Chemical |
| Radical polymerization initiator 1 | PEROCTA (registered trademark) O | 1,1,3,3-tetramethyl butyl peroxy-2-ethyl hexanoate | - | NOF |
| Radical polymerization initiator 2 | PERCUMYL (registered trademark) D | dicumyl peroxide | - | NOF |
| Plasticizing agent | TOP | tris(2-ethylhexyl)phosphate | 12 mPa·s | Daihachi Chemical Industry |

Epoxy resin 1 is a bisphenol A epoxy resin having a nominal viscosity at 25°C of 9 Pa·s to 11 Pa·s.

Epoxy resin 2 is a glycidylamine type epoxy resin having a nominal viscosity at 25°C of 1.6 Pa·s to 2.6 Pa·s.

Curing agent 1 is an amine adduct type latent curing agent having a melting point at 59°C.

Curing agent 2 is an imidazole latent curing agent having a melting point at 253°C.

Thickening agent is a carboxylic acid anhydride having a nominal viscosity at 25°C of 50 mPa·s to 80 mPa·s.

Radically polymerizable liquid monomer is a bifunctional acrylate having a nominal viscosity at 25°C of 130 mPa·s to 170 mPa·s.

Radical polymerization initiator 1 is an organic peroxide-based polymerization initiator having a one-minute half-life temperature of 124°C and a ten-hour half-life temperature of 65°C.

Radical polymerization initiator 2 is an organic peroxide-based polymerization initiator having a one-minute half-life temperature of 175°C and a ten-hour half-life temperature of 116°C.

Plasticizing agent is a phosphate ester having a nominal viscosity at 25°C of 12 mPa·s.

### [Experiment 1]

In a room at a temperature of approximately 25°C, the following materials were mixed at the following ratios, so that Composition 1 was obtained.

| | |
|---|---|
| Epoxy resin 1 | 95 parts by weight |
| Epoxy resin 2 | 5 parts by weight |
| Curing agent 1 | 4 parts by weight |
| Curing agent 2 | 4 parts by weight |
| Thickening agent | 11 parts by weight |

The initial viscosity of Composition 1 was 7 Pa·s.

Composition 1 was kept at 25°C for 7 days so as to be a thickened matter having a viscosity at 25°C of 4000 Pa·s. Thereafter, when the viscosity of this thickened matter at increased temperatures was measured, the viscosity was 3 Pa·s at 70°C and 0.8 Pa·s at 90°C.

A cured product of Composition 1 had a strength of 120 MPa, an elastic modulus of 3.0 GPa, and a glass transition temperature of 154°C.

The VOC evaluation result of the cured product of Composition 1 was 2.5 ppm (in terms of toluene).

### [Experiment 2]

Composition 2 was prepared as in Experiment 1 except that the mixing ratio of Thickening agent was changed from 11 parts by weight to 20 parts by weight with respect to 100 parts by weight of the epoxy resin.

The initial viscosity of Composition 2 was 7 Pa·s.

Composition 2 was kept at 25°C for 5 days so as to be a thickened matter having a viscosity at 25°C of over 20000 Pa·s. Thereafter, when the viscosity of this thickened matter at increased temperatures was measured, the viscosity was 110 Pa·s at 70°C and 70 Pa·s at 90°C.

### [Experiment 3]

Composition 3 was prepared as in Experiment 2 except that 30 parts by weight of Plasticizing agent was additionally mixed with respect to 100 parts by weight of the epoxy resin.

The initial viscosity of Composition 3 was 1 Pa·s.

Composition 3 was kept at 25°C for 16 days so as to be a thickened matter having a viscosity at 25°C of 2200 Pa·s. Thereafter, when the viscosity of this thickened matter at increased temperatures was measured, the viscosity was 30 Pa·s at 70°C and 10 Pa·s at 90°C.

A cured product of Composition 3 had a strength of 74 MPa, an elastic modulus of 1.9 GPa, and a glass transition temperature of 135°C.

### [Experiment 4]

Composition 4 was prepared as in Experiment 2 except that 30 parts by weight of Radically polymerizable liquid monomer was additionally mixed with respect to 100 parts by weight of the epoxy resin.

The initial viscosity of Composition 4 was 2 Pa·s.

Composition 4 was kept at 25°C for 15 days so as to be a thickened matter having a viscosity at 25°C of 4900 Pa·s. Thereafter, when the viscosity of this thickened matter at increased temperatures was measured, the viscosity was 100 Pa·s at 70°C and 30 Pa·s at 90°C.

A cured product of Composition 4 had a strength of 135 MPa, an elastic modulus of 2.9 GPa, and a glass transition temperature of 130°C.

The VOC evaluation result of the cured product of Composition 4 was 4.7 ppm (in terms of toluene).

### [Experiment 5]

Composition 5 was prepared as in Experiment 4 except that 0.54 parts by weight of Radical polymerization initiator 1 was additionally mixed with respect to 100 parts by weight of the epoxy resin.

The initial viscosity of Composition 5 was 2 Pa·s.

Composition 5 was kept at 25°C for 8 days so as to be a thickened matter having a viscosity at 25°C of 4900 Pa·s. Thereafter, when the viscosity of this thickened matter at increased temperatures was measured, the viscosity was 35 Pa·s at 70°C and 130 Pa·s at 90°C. In other words, when the temperature of the thickened matter of Composition 5 was increased, the viscosity turned from decreasing to increasing at a temperature of less than 90°C.

A cured product of Composition 5 had a strength of 138 MPa, an elastic modulus of 3.2 GPa, and a glass transition temperature of 144°C.

The VOC evaluation result of the cured product of Composition 5 was 9.8 ppm (in terms of toluene).

### [Experiment 6]

Composition 6 was prepared as in Experiment 4 except that 0.53 parts by weight of Radical polymerization initiator 2 was additionally mixed with respect to 100 parts by weight of the epoxy resin.

The initial viscosity of Composition 6 was 2 Pa·s.

Composition 6 was kept at 25°C for 15 days so as to be a thickened matter having a viscosity at 25°C of 6000 Pa·s. Thereafter, when the viscosity of this thickened matter at increased temperatures was measured, the viscosity was 130 Pa·s at 70°C and 45 Pa·s at 90°C.

A cured product of Composition 6 had a strength of 131 MPa, an elastic modulus of 3.1 GPa, and a glass transition temperature of 133°C.

The VOC evaluation result of the cured product of Composition 6 was 11.9 ppm (in terms of toluene).

Table 2 shows formulations of Compositions 1 to 6 and an initial viscosity and properties after curing which each of Compositions measured in Experiments 1 to 6 had.

**[Table 2]**

| | | Liquid epoxy resin composition | | | | | |
|---|---|---|---|---|---|---|---|
| | | Composition 1 | Composition 2 | Composition 3 | Composition 4 | Composition 5 | Composition 6 |
| Mixing ratio [parts by weight] | Epoxy resin 1 | 95 | 95 | 95 | 95 | 95 | 95 |
| | Epoxy resin 2 | 5 | 5 | 5 | 5 | 5 | 5 |
| | Epoxy curing agent 1 | 4 | 4 | 4 | 4 | 4 | 4 |
| | Epoxy curing agent 2 | 4 | 4 | 4 | 4 | 4 | 4 |
| | Thickening agent | 11 | 20 | 20 | 20 | 20 | 20 |
| | Plasticizing agent | - | - | 30 | - | - | - |
| | Radically polymerizable liquid monomer | - | - | - | 30 | 30 | 30 |
| | Radical polymerization initiator 1 | - | - | - | - | 0.54 | - |
| | Radical polymerization initiator 2 | - | - | - | - | - | 0.53 |
| Initial viscosity [Pa·s] | | 7 | 7 | 1 | 2 | 2 | 2 |
| Strength of cured product [MPa] | | 120 | not measured | 74 | 135 | 138 | 131 |
| Elastic modulus of cured product [GPa] | | 3 | not measured | 1.9 | 2.9 | 3.2 | 3.1 |
| Glass transition temperature of cured product [°C] | | 154 | not measured | 135 | 130 | 144 | 133 |

### [Experiment 7]

A random mat which was formed from a continuous carbon fiber bundle that had 15000 filaments per bundle and that was partially split was impregnated with Composition 1, so that an SMC was prepared. The SMC had a thickness of approximately 2 mm, a weight per unit area of 1800 g/m², and a fiber content of 58% by weight. When the random mat was formed, the carbon fiber bundle was cut so that the fiber length became 2.5 cm. A thickening temperature and a thickening time of a matrix after the aforesaid impregnation were set to be 25°C and 5 days, respectively.

Two cut pieces of this SMC of 275 mm × 275 mm were stacked, placed in a mold heated to a constant temperature of 130°C, and held for 30 seconds, followed by clamping the mold. An FRP plate of 300 mm × 300 mm × 2 mm was molded by compression at a pressure of 4 MPa for 10 minutes.

The weight of a burr produced during molding was 31.4 g, which was 11% of a total weight of 281 g of the SMC used.

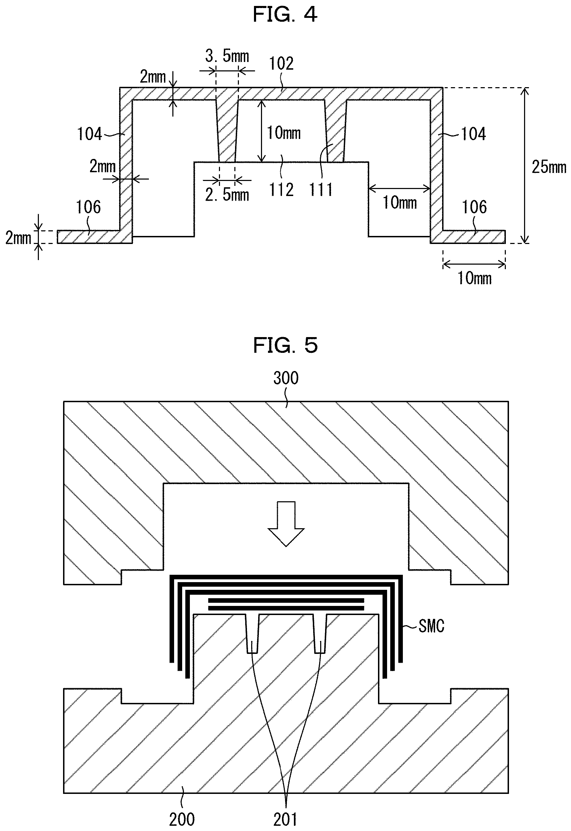

Further, by compression molding of the same SMC, a ribbed hat channel 100 illustrated in Figs. 3 and 4 was prepared. The ribbed hat channel 100 has a slender top plate 102, a pair of side walls 104 that extend along a longitudinal direction of the top plate 102, a flange 106 that extends outward from a lower edge of each of the side walls, a first rib 111 that protrudes from the top plate 102 and extends in the longitudinal direction of the top plate 102, and a second rib 112 that protrudes from the top plate 102 and the side walls 104 and that extends in a transverse direction of the top plate 102.

The ribbed hat channel 100 had the following dimensions: a length of 430 mm, a total width of 72 mm, a flange width of 10 mm, a height of 25 mm, a thickness of 2 mm, and a rib height of 10 mm. Both the first rib 111 and the second rib 112 had a rib thickness of 2.5 mm at a position that was most distant from the top plate 102. The rib thickness at a joint with the top plate 102 was 3 mm in the case of the first rib 111 and 3.5 mm in the case of the second rib 112, since a draft angle was provided. Molding conditions were set as follows: 130°C, 280 kN, and 10 minutes.

When the mold was charged with the SMC, three cut pieces of the SMC of 420 mm × 95 mm and two cut pieces of the SMC of 420 mm × 40 mm were placed between a male mold 200 and a female mold 300 as illustrated in Fig. 5. That is, without placing the SMC in grooves 201 provided in the male mold 200, a portion of the SMC placed outside the grooves was made to flow into the grooves, so that the first rib 111 and the second rib 112 were formed.

The SMC exhibited good softness, and could be bent by hand without any difficulty without heating. It was also easy to bend and lay the three cut pieces of the SMC of 420 mm × 95 mm along the shape of a protruding part of the male mold 200.

When the ribbed hat channel 100 thus prepared was observed, in the vicinity of edges of both of the first rib 111 and the second rib 112, a plurality of parts were found that were not filled with carbon fibers and were made only of the cured resin.

### [Experiment 8]

An SMC was prepared as in Experiment 7 except that Composition 2 was used in place of Composition 1.

The SMC obtained did not have good softness, took longer to cut than the SMC obtained in Experiment 7, and was difficult to bend by hand without heating.

When an FRP plate was molded as in Experiment 7 from the SMC prepared with use of Composition 2, the weight of a burr occurred was 3.1 g, which was 1% of a weight of 288 g of the SMC used.

Further, when a ribbed hat channel 100 was molded as in Experiment 7 from the SMC prepared with use of Composition 2 and was observed, a part which was made only of a cured resin and filled with no carbon fibers was found to exist scarcely both in the first rib 111 and in the second rib 112.

### [Experiment 9]

An SMC was prepared as in Experiment 7 except that Composition 4 was used in place of Composition 1.

The SMC obtained had softness equivalent to that of the SMC obtained in Experiment 7.

When an FRP plate was molded as in Experiment 7 from the SMC prepared with use of Composition 4, the weight of a burr occurred was 10.2 g, which was 4% of a weight of 283 g of the SMC used.

Further, when a ribbed hat channel 100 was molded as in Experiment 7 from the SMC prepared with use of Composition 4, and was observed, a part which was made only of a cured resin and filled with no carbon fibers was found to exist scarcely both in the first rib 111 and in the second rib 112.

### [Experiment 10]

An SMC was prepared as in Experiment 7 except that Composition 5 was used in place of Composition 1.

The SMC obtained had softness equivalent to that of the SMC obtained in Experiment 7.

When an FRP plate was molded as in Experiment 7 from the SMC prepared with use of Composition 5, the weight of a burr occurred was 2.1 g, which was 1% of a weight of 284 g of the SMC used.

Further, when a ribbed hat channel 100 was molded as in Experiment 7 from the SMC prepared with use of Composition 5, and was observed, a part which was made only of a cured resin and filled with no carbon fibers was found to exist scarcely both in the first rib 111 and in the second rib.

### [Experiment 11]

An SMC was prepared as in Experiment 7 except that Composition 6 was used in place of Composition 1.

The SMC obtained had softness equivalent to that of the SMC obtained in Experiment 7.

When an FRP plate was molded as in Experiment 7 from the SMC prepared with use of Composition 6, the weight of a burr occurred was 8.3 g, which was 3% of a weight of 284 g of the SMC used.

Further, when a ribbed hat channel 100 was molded as in Experiment 7 from the SMC prepared with use of Composition 6, and was observed, a part which was made only of a cured resin and filled with no carbon fibers was found to exist scarcely both in the first rib 111 and in the second rib 112.

### [Experiment 12]

Composition 5 was prepared as in Experiment 5, except that, in place of Radical polymerization initiator 1, dilauroyl peroxide [PEROYL (registered trademark) L available from NOF Corporation] which is a polymerization initiator having a one-minute half-life temperature of 116°C and a ten-hour half-life temperature of 62°C was mixed at a ratio of 0.79 parts by weight with respect to 100 parts by weight of the epoxy resin. The VOC evaluation result of the cured product of Composition 5 was 3.3 ppm (in terms of toluene).

### [Experiment 13]

Composition 1 was kept at 25°C for 6 days so as to be a thickened matter having a viscosity at 25°C of 3800 Pa·s. Thereafter, when the viscosity of this thickened matter at increased temperatures was measured, the viscosity was 3 Pa·s at 70°C and 1 Pa·s at 90°C.

### [Experiment 14]

Composition 4 was kept at 25°C for 6 days so as to be a thickened matter having a viscosity at 25°C of 5700 Pa·s. Thereafter, when the viscosity of this thickened matter at increased temperatures was measured, the viscosity was 60 Pa·s at 70°C and 60 Pa·s also at 90°C.

### [Experiment 15]

Composition 6 was kept at 25°C for 6 days so as to be a thickened matter having a viscosity at 25°C of 5600 Pa·s. Thereafter, when the viscosity of this thickened matter at increased temperatures was measured, the viscosity was 47 Pa·s at 70°C and 36 Pa·s at 90°C.

### [Experiment 16]

Composition 7 was prepared as in Experiment 5 except that the mixing ratio of Thickening agent was changed from 20 parts by weight to 19 parts by weight with respect to 100 parts by weight of the epoxy resin.

The initial viscosity of Composition 7 was 2 Pa·s.

Composition 7 was kept at 25°C for 6 days so as to be a thickened matter having a viscosity at 25°C of 3400 Pa·s. Thereafter, when the viscosity of this thickened matter at increased temperatures was measured, the viscosity was 23 Pa·s at 70°C and 90 Pa·s at 90°C.

Further, an SMC was prepared as in Experiment 7 except that Composition 7 was used in place of Composition 1.

The SMC obtained had softness equivalent to that of the SMC obtained in Experiment 7.

When an FRP plate was molded as in Experiment 7 from the SMC prepared with use of Composition 7, the weight of a burr occurred was 2.1 g, which was 0.8% of a weight of 281 g of the SMC used.

### [Experiment 17]

Composition 8 was prepared as in Experiment 6 except that the mixing ratio of Thickening agent was changed from 20 parts by weight to 19 parts by weight with respect to 100 parts by weight of the epoxy resin.

The initial viscosity of Composition 8 was 2 Pa·s.

Composition 7 was kept at 25°C for 6 days so as to be a thickened matter having a viscosity at 25°C of 3600 Pa·s. Thereafter, when the viscosity of this thickened matter at increased temperatures was measured, the viscosity was 24 Pa·s at 70°C and 15 Pa·s at 90°C.

Further, an SMC was prepared as in Experiment 7 except that Composition 8 was used in place of Composition 1.

The SMC obtained had softness equivalent to that of the SMC obtained in Experiment 7.

When an FRP plate was molded as in Experiment 7 from the SMC prepared with use of Composition 8, the weight of a burr occurred was 11.3 g, which was 4% of a weight of 282 g of the SMC used.

### [Experiment 18]

Composition 9 was prepared as in Experiment 5 except that the mixing ratio of Thickening agent was changed from 20 parts by weight to 18 parts by weight with respect to 100 parts by weight of the epoxy resin.

After Composition 9 was thickened by keeping the composition at 25°C for 7 days or for 14 days, respective residues of the epoxy group and the vinyl group were examined by ¹H-NMR analysis.

Specifically, a solution obtained by adding 0.8 ml of hexadeuterodimethyl sulfoxide to 30 mg of Composition 9 which had been thickened and 10 mg of an internal standard reagent (1,2,4,5-tetrachloro-3-nitrobenzene, manufactured by Sigma Aldrich) was put in an NMR tube having a diameter of 0.5 mm. Then, a ¹H-NMR spectrum was measured under the following conditions.
Device: JNM-ECS400 FT-NMR, manufactured by JOEL Ltd.
Magnet: JMTC-400/54/SS, manufactured by JOEL Ltd.
Measurement temperature: 35°C
Spin: 15 Hz
Number of scans: 8 times
x sweep: 20 ppm
x points: 32768
x angle: 90°
Relaxation delay: 50 seconds

With regard to an epoxy group of Epoxy resin 1 (bisphenol type epoxy resin), a peak from 2.78 ppm to 2.85 ppm derived from a proton of the epoxy group was focused.

With regard to an epoxy group of Epoxy resin 2 (N,N,N',N'-tetraglycidyl-m-xylylenediamine), a peak from 3.01 ppm to 3.07 ppm derived from a proton of the epoxy group was focused.

With regard to a vinyl group, a peak from 6.07 ppm to 6.2 ppm derived from a proton of the epoxy group was focused.

Results of measurement showed that both of the epoxy group and the vinyl group remained in both Composition 9 which had been kept at 25°C for 7 days and Composition 9 which had been kept at 25°C for 14 days.

Composition 9 having been kept at 25°C for 14 days did not dissolve in the entire amount (30 mg) in 0.8 ml of hexadeuterodimethyl sulfoxide, so quantification with high precision was difficult, but it contained far more than trace amounts of epoxy groups and vinyl groups. In light of this, it was inferred that most of Radically polymerizable liquid monomers (dimethylol-tricyclodecane diacrylate) remained without being polymerized even after Composition 9 had been thickened.

Further, a remaining amount of Thickening agent (3 or 4-methyl-1,2,3,6-tetrahydrophthalic anhydride) after Composition 9 had been kept at 25°C for 7 days or 14 days to thicken was evaluated by FT-IR spectral measurement. Specifically, an area ratio of a peak at 1780 cm⁻¹ derived from the carboxylic acid anhydride and a peak at 1510 cm⁻¹ derived from a benzene ring in an FT-IR spectrum of Composition 9 obtained by total reflectometry (ATR method) was calculated and used as an index of the remaining amount of Thickening agent.

As a result of the above measurement, a slight residue of Thickening agent was found in Composition 9 which had been kept at 25°C for 7 days, whereas no residue of Thickening agent was found in Composition 9 which had been kept at 25°C for 14 days.

The present invention has been explained by referring to concrete embodiments, but the concrete embodiments are provided merely as examples, and are not intended to limit the scope of the present invention. The embodiments described in the present specification each can be altered in various ways to the extent that an effect of the present invention can be yielded, and can be combined with a feature explained in another embodiment to the extent practicable.

### Industrial Applicability

An embodiment of the present invention disclosed in the present specification can be suitably applied to production of FRP parts which are to be used in various kinds of equipment for transportation such as automobiles, ships, railway vehicles, manned aircrafts, and unmanned aircrafts.

### Reference Signs List

1 chopper
2a first applicator
2b second applicator
3 impregnating machine
10 continuous fiber bundle
20 short fiber bundle
30 random mat
41 first resin paste
41L first resin paste layer
42 second resin paste
42L second resin paste layer
51 first carrier film
52 second carrier film
60 laminate
100 ribbed hat channel
102 top plate
104 side wall
106 flange
111 first rib
112 second rib
200 male mold
201 groove
300 female mold
P package

## Claims

1. A method for producing a prepreg comprising a fiber reinforcement and a matrix, the method comprising:
obtaining an impregnated fiber reinforcement by impregnating the fiber reinforcement with a liquid epoxy resin composition which is a precursor material of the matrix; and
thickening the liquid epoxy resin composition in the impregnated fiber reinforcement,
wherein an epoxy resin, an epoxy curing agent, a thickening agent, and a radically polymerizable liquid monomer are mixed in the liquid epoxy resin composition, and
the thickening is performed so that the epoxy curing agent and the radically polymerizable liquid monomer remain in the matrix.

2. The method according to claim 1, wherein the matrix comprises an epoxy group.

3. The method according to claim 1 or 2, wherein:
the thickening comprises keeping the impregnated fiber reinforcement at a predetermined temperature for a predetermined time; and
the liquid epoxy resin composition which has been kept at the predetermined temperature for the predetermined time has a viscosity at 25°C of more than or equal to 2000 Pa·s, preferably more than or equal to 3000 Pa·s, and more preferably more than or equal to 4000 Pa·s, and less than or equal to 20000 Pa·s, preferably less than or equal to 10000 Pa·s, and more preferably less than or equal to 8000 Pa·s, where the viscosity is measured with use of a rheometer, under the following conditions: an oscillatory mode, an angular velocity of 10 rad/s, a fixed stress of 300 Pa, a plate diameter of 25 mm, and a distance between plates of 0.5 mm.

4. The method according to any one of claims 1 to 3, wherein a viscosity of the liquid epoxy resin composition when having been kept at 25°C for more than or equal to 6 days and less than or equal to 15 days from preparation thereof is, at 25°C, more than or equal to 2000 Pa·s, preferably more than or equal to 3000 Pa·s, and more preferably more than or equal to 4000 Pa·s, and less than or equal to 20000 Pa·s, preferably less than or equal to 10000 Pa·s, and more preferably less than or equal to 8000 Pa·s, where the viscosity is measured with use of a rheometer, under the following conditions: an oscillatory mode, an angular velocity of 10 rad/s, a fixed stress of 300 Pa, a plate diameter of 25 mm, and a distance between plates of 0.5 mm.

5. The method according to any one of claims 1 to 4, wherein the matrix is plasticized by the radically polymerizable liquid monomer.

6. The method according to any one of claims 1 to 5, wherein the radically polymerizable liquid monomer comprises a (meth)acrylate.

7. The method according to claim 6, wherein the (meth)acrylate comprises a multifunctional (meth)acrylate.

8. The method according to claim 7, wherein the multifunctional (meth)acrylate comprises a bifunctional (meth)acrylate.

9. The method according to any one of claims 1 to 8, wherein the radically polymerizable liquid monomer comprises a radically polymerizable liquid monomer that has a molecular weight of more than or equal to 150 and preferably more than or equal to 200.

10. The method according to any one of claims 1 to 9, wherein a viscosity of the liquid epoxy resin composition measured within 5 minutes from preparation thereof is, at 25°C, less than or equal to 15 Pa·s, preferably less than or equal to 10 Pa·s, and more preferably less than or equal to 5 Pa·s, where the viscosity is measured with use of a rheometer, under the following conditions: an oscillatory mode, an angular velocity of 10 rad/s, a fixed stress of 300 Pa, a plate diameter of 25 mm, and a distance between plates of 0.5 mm.

11. The method according to any one of claims 1 to 10, wherein when a viscosity of a thickened matter obtained by keeping the liquid epoxy resin composition at 25°C from immediately after preparation thereof so as to thicken to have a viscosity at 25°C within a range of 2000 Pa·s to 8000 Pa·s is measured while increasing temperature at a rate of 2°C/min, the viscosity at 70°C is more than or equal to 10 Pa·s, preferably more than or equal to 20 Pa·s, more preferably more than or equal to 30 Pa·s, and still more preferably more than or equal to 50 Pa·s, and preferably less than or equal to 1000 Pa·s, where the viscosity is measured with use of a rheometer, under the following conditions: an oscillatory mode, an angular velocity of 10 rad/s, a fixed stress of 300 Pa, a plate diameter of 25 mm, and a distance between plates of 0.5 mm.

12. The method according to any one of claims 1 to 11, wherein a radical polymerization initiator is further mixed in the liquid epoxy resin composition.

13. The method according to claim 12, wherein the radical polymerization initiator comprises a radical polymerization initiator having a one-minute half-life temperature of less than or equal to 130°C.

14. The method according to claim 12 or 13, wherein when (i) a temperature at which a viscosity of a thickened matter measured while increasing temperature at a rate of 2°C/min turns from decreasing to increasing is referred to as a first temperature, the thickened matter being obtained by keeping the liquid epoxy resin composition at 25°C from immediately after preparation thereof so as to thicken to have a viscosity at 25°C within a range of 2000 Pa·s to 8000 Pa·s and (ii) a temperature at which a viscosity of another thickened matter measured while increasing temperature at a rate of 2°C/min turns from decreasing to increasing is referred to as a second temperature, the another thickened matter being obtained by thickening in the same manner as the liquid epoxy resin composition of a control epoxy resin composition prepared in the same manner as the liquid epoxy resin composition except that the radical polymerization initiator is not mixed, the first temperature is lower than the second temperature, where the viscosity is measured with use of a rheometer, under the following conditions: an oscillatory mode, an angular velocity of 10 rad/s, a fixed stress of 300 Pa, a plate diameter of 25 mm, and a distance between plates of 0.5 mm.

15. The method according to any one of claims 12 to 14, wherein when a viscosity of a thickened matter obtained by keeping the liquid epoxy resin composition at 25°C from immediately after preparation thereof so as to thicken to have a viscosity at 25°C within a range of 2000 Pa·s to 8000 Pa·s is measured while increasing temperature at a rate of 2°C/min, the viscosity at 70°C is higher than the viscosity at 90°C, where the viscosity is measured with use of a rheometer, under the following conditions: an oscillatory mode, an angular velocity of 10 rad/s, a fixed stress of 300 Pa, a plate diameter of 25 mm, and a distance between plates of 0.5 mm.

16. The method according to any one of claims 12 to 15, wherein the radical polymerization initiator has a ten-hour half-life temperature of more than or equal to 60°C.

17. The method according to any one of claims 12 to 16, wherein in the thickening, the impregnated fiber reinforcement is kept at a temperature that is lower than the ten-hour half-life temperature of the radical polymerization initiator by more than or equal to 10°C, preferably by more than or equal to 20°C, and more preferably by more than or equal to 30°C.

18. The method according to any one of claims 12 to 17, wherein the radical polymerization initiator comprises a diacyl peroxide that is represented by the following chemical formula: R¹C(=O)OOC(=O)R², where R¹ and R² each are a hydrocarbon group which has more than or equal to ten carbon atoms and which may have a substitutional group.

19. The method according to any one of claims 11 to 18, wherein a polymerization inhibitor is further mixed in the liquid epoxy resin composition.

20. The method according to any one of claims 1 to 19, wherein the epoxy resin comprises a bisphenol type epoxy resin.

21. The method according to any one of claims 1 to 20, wherein the epoxy curing agent comprises a latent curing agent.

22. The method according to claim 21, wherein the latent curing agent comprises at least one curing agent selected from the group consisting of imidazoles, dicyandiamide, boron trifluoride-amine complexes, and amine adducts.

23. The method according to any one of claims 1 to 22, wherein the thickening agent comprises a non-radically polymerizable compound.

24. The method according to any one of claims 1 to 23, wherein the thickening agent comprises a compound that reacts with a compound having an epoxy group to produce a compound having a larger molecular weight.

25. The method according to any one of claims 1 to 24, wherein the thickening agent comprises a carboxylic acid anhydride.

26. The method according to claim 25, wherein a tertiary amine is mixed in the liquid epoxy resin composition.

27. The method according to any one of claims 1 to 24, wherein the thickening agent comprises an amine compound.

28. The method according to any one of claims 1 to 24, wherein the thickening agent comprises a polyisocyanate.

29. The method according to claim 28, wherein a polyol is mixed in the liquid epoxy resin composition.

30. The method according to any one of claims 1 to 29, wherein the fiber reinforcement comprises carbon fibers.

31. The method according to any one of claims 1 to 30, wherein the prepreg is a sheet molding compound.

32. A prepreg produced by a method according to any one of claims 1 to 30.

33. A sheet prepreg which is produced by a method according to any one of claims 12 to 19 and which uses, as a protection film that protects a surface of the sheet prepreg, a polyolefin film that may be a polyethylene film or a polypropylene film.

34. A prepreg comprising a fiber reinforcement and a matrix, the matrix being an epoxy resin composition comprising an epoxy curing agent and a radically polymerizable liquid monomer, the epoxy resin composition having been thickened with use of a thickening agent so as to have a viscosity at 25°C of more than or equal to 2000 Pa·s, preferably more than or equal to 3000 Pa·s, and more preferably more than or equal to 4000 Pa·s, and less than or equal to 20000 Pa·s, preferably less than or equal to 10000 Pa·s, and more preferably less than or equal to 8000 Pa·s, where the viscosity is measured with use of a rheometer, under the following conditions: an oscillatory mode, an angular velocity of 10 rad/s, a fixed stress of 300 Pa, a plate diameter of 25 mm, and a distance between plates of 0.5 mm.

35. The prepreg according to claim 34, wherein the matrix is plasticized by the radically polymerizable liquid monomer.

36. The prepreg according to claim 34 or 35, wherein the radically polymerizable liquid monomer comprises a radically polymerizable liquid monomer that has a molecular weight of more than or equal to 150 and preferably more than or equal to 200.

37. The prepreg according to any one of claims 34 to 36, wherein the radically polymerizable liquid monomer comprises a (meth)acrylate.

38. The prepreg according to claim 37, wherein the (meth)acrylate comprises a multifunctional (meth)acrylate.

39. The prepreg according to claim 38, wherein the multifunctional (meth)acrylate comprises a bifunctional (meth)acrylate.

40. The prepreg according to any one of claims 34 to 39, wherein the matrix further comprises a radical polymerization initiator.

41. The prepreg according to claim 40, wherein the radical polymerization initiator comprises a radical polymerization initiator having a one-minute half-life temperature of less than or equal to 130°C.

42. The prepreg according to claim 40 or 41, wherein the radical polymerization initiator has a ten-hour half-life temperature of more than or equal to 60°C.

43. The prepreg according to any one of claims 40 to 42, wherein the radical polymerization initiator comprises a diacyl peroxide that is represented by the following chemical formula: R¹C(=O)OOC(=O)R², where R¹ and R² each are a hydrocarbon group which has more than or equal to ten carbon atoms and which may have a substitutional group.

44. The prepreg according to any one of claims 40 to 43, wherein the radical polymerization initiator is not a photo radical polymerization initiator.

45. The prepreg according to any one of claims 34 to 39, wherein the matrix comprises no radical polymerization initiator.

46. The prepreg according to any one of claims 40 to 44, wherein the matrix further comprises a polymerization inhibitor.

47. The prepreg according to any one of claims 34 to 46, wherein a bisphenol type epoxy resin is mixed in the epoxy resin composition.

48. The prepreg according to any one of claims 34 to 47, wherein the epoxy curing agent comprises a latent curing agent.

49. The prepreg according to claim 48, wherein the latent curing agent comprises at least one curing agent selected from the group consisting of imidazoles, dicyandiamide, boron trifluoride-amine complexes, and amine adducts.

50. The prepreg according to any one of claims 34 to 49, wherein the fiber reinforcement comprises carbon fibers.

51. The prepreg according to any one of claims 34 to 50, wherein the fiber reinforcement is a random mat.

52. The prepreg according to any one of claims 34 to 51, which is a sheet, and a surface of which is protected with a polyolefin film that may be a polyethylene film or a polypropylene film.

53. The prepreg according to any one of claims 34 to 52, being a sheet molding compound.

54. The prepreg according to any one of claims 34 to 53, having a thickness that is within a range of 1 mm to 4 mm and that may be within a range of 1.5 mm to 3 mm.
